# EUROPEAN PATENT SPECIFICATION

(11) **EP 4 568 488 B1**
(45) Date of publication and mention of the grant of the patent: **24.06.2026**
(21) Application number: 23800971.6
(22) Date of filing: 25.10.2023
(51) Int. Cl.: A23L 19/18, A23L 19/00, A23B 2/80, A21D 2/36, A23B 7/04

(54) **VEGETABLE- AND/OR FRUIT-CONTAINING SNACK FOOD PRODUCTS AND MANUFACTURE THEREOF**
GEMÜSE- UND/ODER OBSTHALTIGE SNACKPRODUKTE UND HERSTELLUNG DAVON
EN-CAS CONTENANT DES LÉGUMES ET/OU DES FRUITS ET SA PRÉPARATION

(30) Priority: 26.10.2022 GB 202215829
(43) Date of publication of application: 18.06.2025
(73) Proprietor: PepsiCo International Limited, Reading, Berkshire RG2 6UW (GB)
(72) Inventor: BOWS, John Richard, Reading Berkshire RG2 6UW (GB); LANGSTON, Faye Margaret Alison, Reading Berkshire RG2 6UW (GB)
(74) Representative: McNamara, Kathryn
(86) International application number: PCT/IB2023/060758
(87) International publication number: WO 2024/089617

(56) References cited:
- GB-A- 2 575 735
- US-A- 5 264 238
- US-A1- 2010 266 734
- US-A1- 2022 046 965
- US-A1- 2022 192 241
- PEREZ-MORAL NATALIA ET AL: "Comparative bio-accessibility, bioavailability and bioequivalence of quercetin, apigenin, glucoraphanin and carotenoids from freeze-dried vegetables incorporated into a baked snack versus minimally processed vegetables: Evidence fromin vitromodels and a human bioavailability study", JOURNAL OF FUNCTIONAL FOODS, ELSEVIER BV, NL, vol. 48, 21 July 2018 (2018-07-21), pages 410 - 419, XP085483130, ISSN: 1756-4646, DOI: 10.1016/J.JFF.2018.07.035

## Description

### Field of the Invention

The present invention relates to vegetable and/or fruit containing snack food products and to methods of manufacture of such products. In particular, the present invention relates to snack foods which combine non-dehydrated, non-powdered vegetable(s) and/or fruit(s) with additional ingredients to form a dough which is baked using microwave, impingement and conventional oven baking. The resultant snack food product has a high level of phytochemicals and comprises fruit and/or vegetable with an intact cellular structure.

### Background

There is an increasing recognition of the need to consume healthy foods. Fruits and vegetables are a key component of a healthy diet for the prevention of chronic diseases such as cardiovascular disease and cancer. However, despite their benefits, the majority of the population in affluent and developing countries still do not consume the recommended servings of fruit and vegetables per day (which in the UK is five portions per day).

It is therefore important that new approaches are found to increase fruit and vegetable consumption. In the field of snack foods, there has been a focus on producing snack foods which have a significant content of vegetable and/or fruit matter and have a high nutritional content.

Traditional manufacturing processes present multiple challenges in forming and/or dehydrating fabricated snacks comprising vegetables and fruit however. The use of fruit and vegetable in fabricated snack food manufacturing is often limited due to the inherent high moisture content of these ingredients which hinders or makes economically unfeasible the forming and/or dehydration process. This issue is often overcome using dehydrated fruit and/or vegetable materials (most commonly powders, followed by flakes). For example, extruded then fried plant-based snack products typically contain 3-15% plant-based material which is derived from a plant-based powder. However, the dehydration of plant substrates typically results in loss of heat-labile nutrients, colour changes, altered reconstitution properties, reduced antioxidant activity and substandard sensory attributes. The use of plant-based powders to make snack food products thus negatively impacts on the visual, nutritional and sensory properties of the snack, resulting in products with limited range of texture attributes (typically being fairly high density), faded flavours and dull colours.

In addition, the incorporation of fruit and vegetable matter into snack food products for health purposes is challenging as a result of the methods typically used to manufacture snacks, such as extrusion, hot-air drying and frying, which can impact on the nutritional content of the fruit and vegetables, and thus the health benefit of the resultant snack.

As an alternative, consideration could be given to the incorporation of nutrients or bioactives into the ingredients of the snack food recipe. However, processing factors like temperature, pressure, moisture and mixing have a critical effect on the stability of the bioactive components during manufacture of the snack food, and the capacity of the resultant snack food to instigate health benefits when consumed. It is necessary not only to provide bioactive component in the original ingredient recipe, but also to provide the bioactive component in bioavailable form so that when the snack food is consumed by the human body, the bioactive component is bioavailable within the body.

Phytochemicals (also called phytonutrients), are an example of bioactives. Phytochemicals are compounds produced by plants that are known to confer health benefits, as they have a bioactive role in the body when ingested. As such it would be beneficial for phytochemicals to be retained in plant matter incorporated into snack foods. However, phytochemicals, similarly to certain vitamins, such as vitamin C and some B vitamins, can be sensitive to light, heat, and pH. As a result, phytochemicals tend to degrade during traditional snack food production methods. A study by Perez-Moral et al. (J. functional foods. Vol. 48 (2018): 410-419. doi:10.1016/j.jff.2018.07.035) compared the content and bioequivalence of phytochemicals delivered by a baked snack comprising freeze-dried broccoli, carrot, onion, and parsley in a potato based dough, produced through hot-air impingement drying compared to that of the original cooked vegetables. Using a Caco-2 cell model, the study found there was no significant differences in the transport or rate of uptake of either quercetin or apigenin between the product and the matched vegetable mix digests, demonstrating a bioequivalence in these compounds. These predictions were also largely supported by a human clinical trial which showed general agreement with the in *vitro* bioaccessibility (Caco-2) and bioavailability (duodenal gastric model). These findings did not pertain to the B-carotene and glucosinolate compounds in the snacks however. WO2019/008088 discloses the incorporation of primarily freeze-dried vegetables into a dough to create a snack product containing bioactives.

Another challenge often encountered in the manufacturing of such snack foods is linked to the shaping and sizing of the ingredients itself. Fruit and vegetable are often the most expensive ingredients in these products, and as such it is preferable to maintain visible pieces of fruit and vegetable that the consumer can recognise; or at least fruit and vegetable with an intact cellular structure (which is lost when fruit and/or vegetables are dehydrated and powdered). However, the most common manufacturing processes for non-fried snack foods rely on extrusion, sheeting, moulding and/or cutting which require a fairly smooth mix. For this reason, fruit and vegetable are mostly used in the form of juices or smooth purees.

US2010/266734, GB2575735 and US2022/192241 disclose non-fried healthy snack products comprising a certain amount of fruits and vegetables.

There is a need for non-fried snack food products comprising a good level of non-dried and non-powdered vegetable and/or fruit, and wherein the snack product has a good level of one or more phytochemicals and, optionally, attractive sensory and visual properties, allowing retention of discernible and recognizable pieces of fruits or vegetables in the finished snack food.

The present invention aims to meet this need. The present invention also aims to provide a method of manufacturing such a snack food.

### Summary

Accordingly, in a first aspect, there is provided a non-fried fruit- and/or vegetable-containing snack food product comprising a rigid starch matrix comprising potato starch and one or more fruit and/or vegetables; and one or more phytochemicals comprising a carotenoid, a glucosinolate, a flavonoid or a mixture thereof; wherein the fruit and/or vegetable content of the product is between 18-27 wt% based on the weight of the product; and derived from non-dehydrated, non-powdered fruit and/or vegetables.

In some embodiments, the fruit and/or vegetable content of the product is derived from fresh or individually quick frozen (IQF) fruit and/or vegetables.

In some embodiments, the product has a carotenoid content of 2 to 25 mg/100g of snack food product based on the weight of the product; a glucosinolate content of 10 to 58 mg/100g of snack food product based on the weight of the product; and/or a flavonoid content of 85 to 170 mg/100g of snack food product based on the weight of the product.

In some embodiments, the fruit and/or vegetable content of the product is derived from fresh fruit and/or vegetables; and between 25-28 wt% based on the weight of the product. In some such embodiments, the product has a carotenoid content of 21.5-22.5 mg/100 g snack food product based on the weight of the product; a glucosinolate content of 46-54 mg/100g snack food product based on the weight of the product; and a flavonoid content of 161-166 mg /100g snack food product based on the weight of the product. In some embodiments, the fruit and/or vegetables comprise carrot, broccoli, onion and parsley, and the snack food product comprises 10-12 g carrot per 100 g snack food product based on the weight of the product; 3-4 g broccoli per 100g snack food product based on the weight of the product; 8.5-9.5 g onion per 100 g snack food product based on the weight of the product; and 2-3 g parsley per 100g snack food product based on the weight of the product.

In some embodiments, the fruit and/or vegetable content of the product is derived from individually quick frozen (IQF) fruit and/or vegetables; and 18-23 wt% based on the weight of the product. In some such embodiments the product has a carotenoid content of 3 -3.3 mg/100 g snack food product based on the weight of the product; a glucosinolate content of 12-13 mg/100g snack food product based on the weight of the product; and a flavonoid content of 87-96 mg /100 g snack food product based on the weight of the product. In some such embodiments, the fruit and/or vegetables comprise carrot, broccoli, onion and parsley, and the snack food product comprises 11.5-12.5 g carrot per 100 g snack food product based on the weight of the product; 1.5-2.5 g broccoli per 100g snack food product based on the weight of the product; 5.5-6.5 g onion per 100 g snack food product based on the weight of the product; and 1.5-2.5 g, parsley per 100g snack food product based on the weight of the product.

In some embodiments, the moisture content of the product is from 2 to 5 wt% based on the weight of the product.

In a second aspect, there is provided a dough for producing the snack food product in strict conformity with claim 12.

In some such embodiments, the dough has a moisture content of 70 to 80 wt% based on the wet weight of the dough.

In a third aspect, there is provided a method for making the non-fried fruit and/or vegetable containing snack food product in strict conformity with claim 15.

In some embodiments, the fruit and/or vegetables are processed according to step (b), by (i) steam cooking at a temperature of at least 90 °C for a period of from 0.25 to 15 minutes, optionally from 0.5 to 10 minutes; and/or (ii) comminution.

In some embodiments, the fruit and/or vegetables are one or more of carrot, onion broccoli or parsley.

### Figures

Embodiments of the present invention will now be described by way of example only, with reference to the accompanying drawings, in which:
**Figure 1** shows a schematic illustrating a method for making a snack food product according to an embodiment of the present disclosure;
**Figure 2** shows a schematic detailing aspects of a method for making a snack food product according to an embodiment of the present disclosure;
**Figure 3** shows photos of a finished product prepared according to an embodiment of the present disclosure using hybrid baking and fresh vegetables.

### Description

The present disclosure is based on the surprising finding by the inventors that a non-fried snack food product having good levels of phytochemicals could be created using non-dehydrated, non-powdered fruit and/or vegetables and particular processing techniques. In particular, a dough was created comprising fresh or quick individually frozen (IQF) fruit and/or vegetables which was baked using a hybrid baking technique combining the use of microwave drying, impingement drying and hot air convection drying. The resultant product comprises a good level of fruit and/or vegetable content with intact cellular structure (which is lost when fruit and vegetables are dehydrated and powdered) and in some cases, discernible and/or recognizable pieces of fruits or vegetables; and has a good level of at least one phytochemical.

Accordingly, the present disclosure concerns a snack food product; and a method of making such a product.

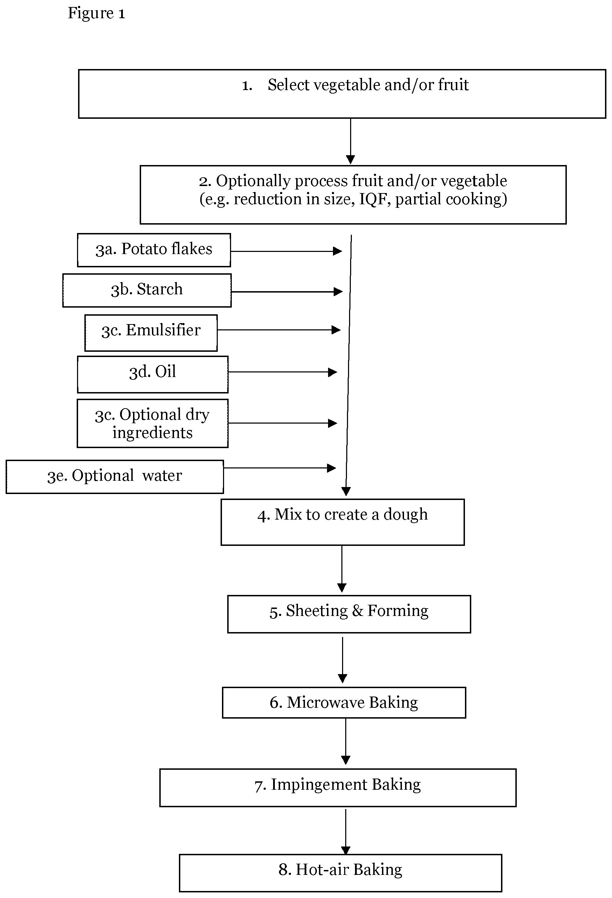

The flow chart in Figure 1 illustrates one embodiment of a method of making a product according to the present disclosure.

### Selection of fruit and/or vegetables

Step 1 of the method concerns selection of a fruit or vegetable.

The vegetable may be any vegetable, however the term 'vegetable' as used herein does not encompass potato. This distinction is made in order to distinguish between the matrix of the snack, which comprises potato as detailed further below; and the 'fruit and vegetable' content of the snack, which is the primary source of phytochemicals in the finished snack.

Examples of vegetables according to the present disclosure include carrot, beetroot, capsicum (also known as a pepper), carrot, cabbage, tomato, peas, broad beans, cabbage, aubergine, sweetcorn, broccoli, spinach; a cucurbit vegetable, such as squash, pumpkin, cucumber, celeriac, celery, courgette or marrow; an allium vegetable such as onion, garlic, shallot, chive or scallion; or herbs or flavourants such as thyme, parsley, basil, oregano, parsley, rosemary, coriander, tarragon chilli or dill; or any mixture of two or more vegetables. The types and combination of vegetables can be selected to give different flavours and/or textures. In some embodiments, the vegetable comprise one or more of broccoli, onion, parsley and carrots.

The fruit may be any fruit, for example one or more of apple, pear, orange, strawberries, blackberries, raspberries, redcurrants, banana, blackcurrants, blueberries, cranberries, persimmon, plum, peach, apricot, orange, mandarin, lemon, grapefruit, lime, mango, cherry, pineapple, kiwi, fig, papaya, starfruit, guava, pomegranate or grape; or any mixture of two or more fruits. The types and combination of fruit can be selected to give different flavours and/or textures.

In some embodiments one or more fruits or vegetables may be selected. In some embodiments, up to 20 types of fruits or vegetables may be selected; or up to 18, up to 15, up to 12, up to 10, up to 9, up to 8, up to 7, up to 6 fruits or vegetables may be selected, or 5, 4, or 3 types or fruits or vegetables; or 2 types of fruits or vegetables; or a single type of fruit or vegetable.

In preferred embodiments, the fruit and/or vegetable is selected on the basis that it is known to have a high content of at least one phytochemical, and/or that the at least one phytochemical content of the fruit or vegetable is not substantially decreased as a result of processing.

In this regard, various studies have examined the phytochemical content of fruit and vegetables, and certain fruit and vegetables have been identified as having high levels of particular phytochemicals. For example, glucosinolates are found in cruciferous vegetables. Additional examples can been seen from Tables A-D, below, which detail phytochemical levels in raw vegetables in fresh weight form. The term 'high content of at least one phytochemical' thus denotes fruit or vegetables which have been identified to have a high level of at least one phytochemical relative to other fruit or vegetables. A skilled person in the field of nutrition would be able to identify such fruit and vegetables.

By 'the at least one phytochemical content of the fruit or vegetable is not substantially decreased as a result of processing' is meant that the level of at least one phytochemical in the raw fruit or vegetable is not reduced by more than about 25% following processing of the vegetable by reducing it in size, IQF and/or partial cooking such as in the ways set out in step 2 of the presently disclosed method (discussed further below).

**Table A: Apigenin (from Cannataro et al. (2021). Antioxidants. 10.328.10.3390/antiox10020328):**

| Vegetable | Average apigenin content (mg/100g) |
|---|---|
| Celery seeds | 78.7 |
| Spinach | 62.0 |
| Parsley | 45.0 |
| Marjoram | 4.4 |
| Oregano | 3.5 |
| Chamomile | 3-5.0 |
| Sage | 3.4 |

**Table B : Quercetin (from Larson et al., (2010). Pharmaceuticals. 3. 10.3390/ph3010237):**

| Vegetable | Average quercetin content (mg/100g) |
|---|---|
| Capers | 233.0 |
| Onions | 22.0 |
| Cranberries | 14.0 |
| Lingonberries | 7.4 |
| Blueberries | 5.0 |
| Red apple | 4.7 |
| Cherries | 2.6 |

**Table C: Glucosinolates (Average varieties of each vegetable, taken from: Carlson et al. (1987) J Am Soc Hortic Sci112:173-178):**

| Vegetable | Average glucosinolate content (mg/100g) |
|---|---|
| Brussels sprouts | 553.0 |
| Callards | 439.1 |
| Kale | 316.3 |
| Broccoli | 188.2 |
| Cauliflower | 94.6 |
| Kohlrabi | 86.1 |

**Table D: β-Carotene (from: USDA Food Composition Databases (https://ndb.nal.usda.gov/ndb/))**

| Vegetable | Average β-Carotene content (µg/100g) |
|---|---|
| Sweet potatoes | 8500 |
| Carrots | 8225 |
| Kale | 5927 |
| Spinach | 5626 |
| Pumpkin | 3100 |
| Apricots | 1094 |
| Tomatoes | 450 |
| Green peas | 449 |
| Sweetcorn | 47 |

In some embodiments, the fruit or vegetable may be one or more of: sweet potato, carrot, butternut squash, tomato, capsicum pepper, apricot, or cantaloupe (known to have a high carotenoid content); brussels sprout, cabbage, savoy cabbage, red cabbage, kale, kohlrabi, pakchoi, horseradish, wasabi, broccoli, cauliflower, turnip, watercress, green mustard or cress (known to have a high glucosinolate content); onion, red onion, spring onion, capers, serrano pepper, chilli pepper, hot wax pepper, ancho pepper, fennel, radish, radicchio, kale, chive, dill, lovage, sorrel, coriander, tarragon, watercress or sweetcorn (known to have a high flavanol content); artichoke, celery, celeriac, spinach, basil, coriander, oregano, parsley, rosemary or thyme (known to have a high flavone content).

In some embodiments the fruit and/or vegetables may be selected in order to impart a particular phytochemical or mix of phytochemicals to the resultant snack food product.

In some embodiments the selected fruit and/or vegetables comprise one or more of broccoli, parsley, onion and carrot. In some preferred embodiments the selected vegetables comprise or consist of broccoli, parsley, onion and carrot. These particular vegetables have high levels of phytochemicals (broccoli: glucosinolates and sulforaphane; onion: quercetin glucosides; parsley: apigenin glucosides, and carrot: beta carotene), and the at least one phytochemical content of these fruit and vegetables is not substantially decreased as a result of processing.

### Processing

In step 2 the selected fruit and/or vegetable is optionally processed. Processing of the selected fruit/vegetable is typically required for ease of incorporation into the dough and subsequent processing of the dough. However, the need for processing may depend on the fruit or vegetable. For example, soft fruits or vegetables (e.g. berries) may not need to be reduced in size.

Typically, the fruit or vegetable may be reduced in size, for example by dicing, grating or shredding to provide pieces of fruit or vegetable. In some embodiments the fruit or vegetable may be processed to provide pieces which are no more than about 5 mm, 4 mm, 3 mm or 2 mm in size in one dimension.

In some embodiments, the fruit or vegetables are provided for incorporation into the dough in the form of pieces, chunks or shreds. These are preferably visible to the naked eye in the final snack food product and/or provide a desired, preferably vibrant, colour to the snack food product. Preferably, the fruit or vegetable pieces include cellular wall material, ideally intact fruit or vegetable cells from the raw, fresh or frozen vegetable, for example from comminuted fresh vegetable, which provides high vegetable flavour and good individual texture and visual appeal of the individual vegetable pieces within the matrix of the final snack food product. In preferred embodiments, the fruit or vegetables may be provided in pieces of up to 5 mm in one dimension, or up to 4 mm, up to 3 mm, up to 2 mm or up to 1 mm in one dimension. In some embodiments, the fruit or vegetables may be provided in pieces of up to 10 mm in one dimension and not more than 5 mm, 4 mm, 3 mm or 2 mm in at least one other dimension. The fruit or vegetable may be fresh i.e. substantially unprocessed, for example a harvested raw vegetable.

In addition, or alternatively, the fruit or vegetable may be frozen, and preferably the fruit and/or vegetable has undergone individual quick freezing (IQF), a term widely use in the food processing industry which means that the food is frozen quickly in individual pieces. In some embodiments, the fruit or vegetable is a harvested raw fruit or vegetable which has undergone IQF. IQF does not result in any significant dehydration of the food material (0.3-2.0% at most).

The fruit or vegetable is not a dehydrated fruit or vegetable, for example not a fruit or vegetable that has been freeze-dried (FD); and is not powdered. Freeze-drying, also known as lyophilization or cryo-desiccation, is a low temperature dehydration process which involves freezing a material under lowered pressure, so that the ice that forms is removed by sublimation. It is widely used in the food and pharmaceutical industries. Freeze drying removes over 90% of the water in the material, and typically up to 98% of the water in the material.

In some embodiments, the fruit or vegetable is cooked or partially cooked, for example in order to soften or break-down some or all of the cell walls. In some preferred embodiments, the fruit or vegetable is partially cooked until some softening occurs but without any or any substantial loss of colour. In some embodiments the fruit and/or vegetable may be steam cooked at a temperature of at least 90 or 100°C for a period of from 0.25 to 15 minutes, optionally from 0.5 to 10 minutes, optionally from 1 to 5 minutes.

The cooked or partially cooked fruit and or vegetables may be blended or otherwise comminuted for the purposes of reducing its size. Where this step is undertaken, the fruit or vegetable is not processed until a smooth puree is achieved, instead particles or more preferably pieces of fruit or vegetable are retained, for example the fruit or vegetable is processed to provide a 'rough' puree which comprises pieces of the fruit or vegetable, and retains intact cellular wall material from the fruit or vegetable. In such embodiments the pieces of the fruit or vegetable are up to about 5 mm in one dimension, or up to about 4 mm, up to about 3 mm, up to about 2 mm or up to about 1 mm in one dimension. In some embodiments, the fruit or vegetable may be provided in pieces of up to about 10 mm in one dimension and not more than about 5 mm, about 4 mm, about 3 mm or about 2 mm in at least one other dimension.

### Additional Ingredients

In step 3 the fruit and/or vegetable is then incorporated with additional ingredients to provide a dough.

The first additional material is potato. In preferred embodiments, the potato is provided in the form of dried potato, such as potato flakes. The potato provides cohesiveness to the dough and rheological properties to enable the dough to be reliably sheeted and shaped, e.g. die-cut. The use of dehydrated potato such as potato flakes is advantageous as the flakes absorb the moisture resulting from the use of fresh or IQF fruit and vegetables. In preferred embodiments, the potato is not fresh potato, and/or is not provided in the form of potato mash.

The dough further comprises starch, such as potato starch, tapioca starch, oat starch, wheat starch, rice starch or corn starch or any combination thereof. The starch may be a modified starch or pre-gelatinized. In some embodiments the starch is potato starch or a pre-gelatinized waxy maize starch such as Merigel^{™}, or a combination thereof. The starch helps bind the dough and improves the sheeting properties of the dough, which can contribute to a smoother transition when the dough is conveyed on a production line.

The dough further comprises an emulsifier, such as lecithin or a related edible phospholipid. The emulsifier improves the texture and binding of fat and water ingredients.

The dough further comprises an edible oil such as vegetable oil, optionally sunflower oil, further optionally a high-oleic acid sunflower oil (HOSO). In preferred embodiments the oil is HOSO. The oil enhances flavour attributes of the finished product, and contributes to the crispiness and mouthfeel of the finished product.

Other ingredients may be optionally added to provide sensory properties, such as seasonings, flavourings and dry inclusions, for example salt, sugar, pepper, cinnamon, mint, lemongrass, chilli, onion or garlic powder or granules, or dried herbs. Such ingredients may enhance the flavour of the product without changing the essential structure or texture characteristics of the product, or the manufacturing process discussed herein. It is preferred not to use any artificial additives, such as artificial flavourings or colourants. Typically additional ingredients have a size no greater than 3 mm², 2 mm², or 1 mm².

Optionally, water may be added to the other ingredients of the dough. References herein to 'added water' means any water that is added to the other dough ingredients, i.e. water that is added beyond the water that is naturally present in the other ingredients of the dough. The requirement for addition of water depends upon the moisture content of the other ingredients in the dough. In preferred embodiments, addition of water is not required.

### Amounts

Preferably the dough comprises a very high level of non-powdered fruit or vegetable to be incorporated into a dough for a snack food product, which results in a dough with a very high moisture content, as discussed further below. Such a dough would typically be considered too difficult to handle and uneconomical to process into a snack food product.

The amount of each ingredient used to make the dough may be selected based on the type of fruit/vegetables to be included (fresh or IQF), as this will affect the amount of water contributed by the fruit/vegetable content to the dough, as the skilled person would understand.

A recipe for a dough comprising fresh fruit and/or vegetables in accordance with an embodiment of the present discloses comprises the following ingredients based on the total weight of the dough on a wet weight basis:

| | | |
|---|---|---|
| (i) | Fresh vegetable(s)/fruit(s) | 78.72 wt%; |
| (ii) | potato flakes: | 14.04 wt%; |
| (iii) | starch: | 5.03 wt% |
| (iv) | lecithin: | 0.38 wt%; |
| (v) | HOSO: | 0.3 wt%; |
| (vi) | sugar: | 1.53 wt%. |

The total ingredients combined being 100%.

A recipe for a dough comprising IQF fruit and/or vegetables in accordance with an embodiment of the present discloses comprises the following ingredients based on the total weight of the dough on a wet weight basis:

| | | |
|---|---|---|
| (i) | IQF vegetable(s)/fruit(s) | **76.11 wt%;** |
| (ii) | potato flakes: | **18.92 wt%;** |
| (iii) | starch: | **2.83 wt%** |
| (iv) | lecithin: | **0.21 wt%;** |
| (v) | HOSO: | **1.07 wt%;** |
| (vi) | sugar: | **0.86 wt%.** |

The total ingredients combined being 100%.

### Mixing

In step 4 of the method the ingredients of the dough are mixed, such as in a conventional dough mixer. Mixing is carried out to incorporate the ingredients and provide a homogenous or substantially homogenous dough, and so that pieces of vegetable or fruit are distributed throughout the dough. It is not necessary to mix the dough so that any pieces of fruit or vegetable within the dough are broken down significantly or pureed.

### Moisture content

The resultant dough has a moisture content, based on the weight of the dough, of from 60 to 90 wt%, optionally from 70 to 90 wt% or 68 to 85 wt%, further optionally from 70 to 80 wt%.

Doughs according to the present disclosure thus have a very high moisture content for a snack product, and this is as a result of the high level of fresh or IQF fruit and/or vegetable incorporated into the dough.

### Sheeting & forming

The dough is then sheeted and formed, in step 5, into individual dough sheet portions, so that the resultant snack food product is in the form of snack food products. The sheeting and die-cutting steps use conventional apparatus used for the manufacture of snack food products. The dough sheets may have any desired shape and dimensions in plan. Preferably, the individual dough sheet portions are cut from a dough sheet to form plurality of individual dough sheets having a thickness of from 1 to 8 mm. Alternatively, the individual dough sheet portions may be made by rotary forming, stamping or moulding. The individual dough sheet portions may be interconnected by bridge portions to avoid inadvertent slippage of the individual dough sheet portions from a conveyor subsequent processing.

### Baking

In step 6 the dough sheets are then subjected to a first microwave baking step to produce a first intermediate cooked sheet that has a moisture content of between 35-50% based on the weight of the first intermediate cooked sheet, optionally between 35 and 45%, further optionally around 40% based on the weight of the intermediate cooked sheet. The microwave baking step is preferably carried out by conveying the dough sheets through a multi-zone flatbed microwave cooking apparatus. Typically, the microwave baking is carried out by passing the dough sheet through a first generator at a power density of around 4kW, and then a second generator at a power density of 3.75kW, with a total residence time of from 45-55 seconds, optionally around 53 seconds.

The use of a microwave baking step is advantageous in reducing the moisture content of the dough in an economical manner.

After the microwave baking step, the first intermediate cooked sheets are subjected to a second baking step, step 7, to produce a second intermediate cooked sheet that has a moisture content of between 8-15%, optionally between 8-12%, further optionally around 10% based on the weight of the intermediate cooked sheet. The step is preferably carried out by conveying the dough sheets through an impingement oven, which typically comprises a plurality of cooking zones, with each zone being individually controllable with regard to temperature and air flow. Typically, the impingement baking is carried out at an oven temperature of from 135 to 200 °C for a period of from 1.5 to 3 minutes. For example, a two zone oven may be used having zones 1 and 2 as serial zones between an input and output, with zone 1 set at a temperature of 170 °C and zone 2 set at a temperature of 150 °C, and the total residence time in the oven being from 50 to 90 seconds in each zone. Residence time may vary according to the dough used, with doughs comprising fresh fruit and vegetables having a residence time of 50-60 seconds in each zone, for example 55 seconds; and doughs comprising IQF fruit and vegetables having a residence time of 5-75 seconds in each zone, for example 70 seconds.

The use of an impingement oven reduces the moisture content of the dough. In addition, potato based doughs typically pass through glass transition at around 5-10% moisture content at typical drying temperatures, and this locks in the final texture. The impingement oven settings in the present disclosure result in the dough passing through glass transition towards or at the end of the impingement oven baking step. The temperature profile of the impingement oven according to the present disclosure is thus advantageous as it can impact on texture formation of the product as well as dehydration of the dough.

Finally, in step 8 the second intermediate cooked sheets are subjected to a final baking step, typically using a hot air convention oven, to reduce the moisture content, so that the resultant cooked product to within the range of from 0.5 to 5 wt%, preferably from 2 to 5 wt%, more preferably about 4 wt% based on the weight of the finished product. This final baking step may be carried out using a deep bed dryer, typically at a temperature of 115 °C, and a residence time of from 600 to 1200 seconds. Typically, the baking step is carried out at a temperature of around 115 °C for a period of around 20 minutes. The temperature settings are chosen to avoid the sheets passing back through the glass transition (which is a function of temperature and moisture content), as this could negatively impact texture (changing, for example, a light & crispy texture to a hard and dense texture).

The disclosed method uses at least or about 240 g, 250 g, 260 g, 270 g, 275g, or 280g of fruit and/or vegetable to make 100g of finished product. In some embodiments, the disclosed method uses at least or about 260 g, 265 g, 270 g, 271 g, 272 g, 273 g, 274 g, 275 g, 276 g, 277 g, 278 g, 279 g or 280g of fresh fruit and/or vegetable to make 100g of finished product. In some embodiments, the disclosed method uses at least or about 245 g, 250 g, 251 g, 252 g, 253 g, 254 g, 255 g, 256 g, 257 g, 258 g, 259 g, or 260g of IQF fruit and/or vegetable to make 100g of finished product.

### Finished Product

The finished snack food product comprises a rigid potato starch-based matrix which comprises one or more vegetables and/or fruit. The finished product typically has a moisture content of around 4 wt% based on the weight of the finished product.

The rigid matrix imparts the texture to the final product, and in particular the sensory attributes of crispness and/or crunchiness. As the skilled person would understand, the rigid matrix is composed of solid plant-derived material (e.g. starch) in which air pores are located. The plant-derived material is of varying lengths, typically with shorter (sub-micron to micron) and longer (mm to cm) length material, which is connected to provide a structure. The texture of the product is affected by the number and distribution of pores created during dehydration of the product, and the thickness of the cell walls surrounding these pores.

The snack food product according to the present disclosure has a crisp structure, typically associated with snack food products, in which the potato starch-based matrix has an aerated structure comprising at least some cellular voids, conferring a light and crispy texture.

The fruit and /or vegetable content of the finished snack food product is not derived from dehydrated or powdered fruit or vegetables (i.e. the fruit and/or vegetables incorporated into the dough from which the snack product is made are non-dehydrated, non-powdered fruit and/or vegetables). Instead, the fruit and /or vegetable content of the finished snack food product is derived from fresh and/or IQF fruit and/or vegetables (i.e. the fruit and/or vegetables incorporated into the dough from which the snack product is made are fresh and/or IQF fruit and/or vegetables).

Preferably at least some of the fruit and/or vegetable content of the finished snack food product has an intact cellular structure, which results from the use of fresh or IQF fruit and/or vegetables, rather than dehydrated or powdered fruit and vegetables. Furthermore, preferably at least some fruit and/or vegetable content is visible within the product, for example when the product is viewed in plan view or is cut and viewed in cross-section, and optionally, at least some of the fruit or vegetable content may be visible in the form of pieces or particles. Fruit and/or vegetable pieces may impart a different texture to that of the potato matrix, being more dense and having more uniform smaller cellular voids, which may impart a discernibly different texture and mouth feel.

The fruit and /or vegetable content of the finished snack food product is between 18 and 27 wt%, or 19 and 27 wt% or 20 and 27 wt% or 21 and 27 wt% fruit and/or vegetable based on the weight of the finished product; or at least 10 wt% fruit and/or vegetable based on the weight of the finished product, more typically at least or 18, 19, 20, 20.5, 21, 21.1, 21.2, 21.3, 21.4, 21.5, 22.0, 22.5, 23.0, 23.5, 24.0, 24.5, 25.0, 25.5, 25.6, 25.7, 25.8, 25.9, 26.0, 26.1, 26.1, 26.2, 26.3, 26.4, 26.5, 26.6, 26.7, 26.8, 26.9, wt% fruit and/or vegetable based on the weight of the finished product.

In some embodiments where the snack food product is made using IQF fruit and/or vegetables, the fruit and /or vegetable content of the finished snack food product is 18-23 wt% based on the weight of the finished product, at least or 20.5, 20.6, 20.7, 20.8, 20.9, 21.0, 21.1, 21.2, 21.3, 21.4, 21.5, 21.6, 21.7, 21.8, 21.9, 22, 22.5, 23, 23.5, 24, 24.5 or 25 wt%, as derived from the IQF fruit and/or vegetables, based on the weight of the finished product.

The finished snack food product comprises one or more phytochemicals. In some embodiments, the snack food product comprises one or more of a carotenoid, a glucosinolate, a flavonoid, a flavone or a mixture thereof. In some embodiments, the snack food product has a phytochemical content as follows:
(i) a carotenoid content of 2 to 25 mg/100g of snack food product, or 2.5 to 23, or 3-22.5 mg/100 g snack food product.

In some embodiments, the carotenoid content is derived or derived primarily from a fruit and/or vegetable content of between 9 and 14 g/1oog of the snack food product based on the weight of the finished product, or between about 10 and 13 g/100g or 11 and 13 g/100 g of the snack food product based on the weight of the finished product, or 11, 11.1, 11.2, 11.3, 11.4, 11.5, 11.6, 11.7, 11.8, 11.9, 12, 12.1, 12.2, 12.3, 12.4 or 12.5 g/100 g of the snack food product based on the weight of the finished product.

In some embodiments where the snack food product is made from a dough comprising fresh vegetables and/or fruit, the snack food product has a carotenoid content of 16.5-25, 17-24, 17.5-23.5, 18-23.5, 18.5 to 23, or 19 to 22.5 mg/100 g snack food product or 20, 21, 22 or 23 mg/100 g snack food product. In some such embodiments, the carotenoid content is derived or derived primarily from a fruit and/or vegetable content of 11, 11.1, 11.2, 11.3, 11.4, 11.5, 11.6, 11.7, 11.8, 11.9 or 12 g/100 g of the snack food product based on the weight of the finished product. In some such embodiments, the snack food product has a carotenoid content of 19 to 22.5 mg/100 g snack food product or 20, 21, 22 or 23 mg/100 g snack food product, optionally 22 mg/100 g snack food product and the carotenoid content is derived or derived primarily from a fruit and/or vegetable content of 11, 11.1, 11.2, 11.3, 11.4, 11.5, 11.6, 11.7, 11.8, 11.9 or 12 g/100 g of the snack food product based on the weight of the finished product, optionally 11.3 g/100g of the snack food product based on the weight of the finished product.

In some embodiments where the snack food product is made from a dough comprising IQF vegetables and/or fruit, the snack food product has a carotenoid content of 2.5-3.5 mg/100 g snack food product, or 2.5, 3, 3.1, 3.2, 3.3, 3.4 or 3.5 mg mg/100 g snack food product. In some such embodiments, the carotenoid content is derived or derived primarily from a fruit and/or vegetable content of 11.5, 11.6, 11.7, 11.8, 11.9, 12, 12.1, 12.2, 12.3, 12.4 or 12.5 g/100 g of the snack food product based on the weight of the finished product. In some such embodiments, the snack food product has a carotenoid content of 2.5-3.5 mg/100 g snack food product, or 2.5, 3, 3.1, 3.2, 3.3, 3.4 or 3.5 mg/100 g snack food product, optionally about 3.1 mg/100 g snack food product and the carotenoid content is derived or derived primarily from a fruit and/or vegetable content of 11.5, 11.6, 11.7, 11.8, 11.9, 12, 12.1, 12.2, 12.3, 12.4 or 12.5 g/100 g of the snack food product based on the weight of the finished product, optionally 12 g/100g to the snack food product based on the weight of the finished product.

In some embodiments, the carotenoid content of the snack food product is derived or derived primarily from carrot;
and/or
(ii) a glucosinolate content of 10 to 58 mg/100g of snack food product based on the weight of the finished product, or 10.5 - 56, 11.0-55.5, 11.5-54.5, 11.5-54 mg/100g snack food product based on the weight of the finished product.

In some embodiments, the glucosinolate content is derived or derived primarily from a fruit and/or vegetable content of between 1 and 4 g/100g of the snack food product based on the weight of the finished product, or between 1.5 and 4 g/100g or 1.6-3.9, 1.7-3.8, 1.8-3.7, 1.8-3.6 or 1.9-3.5 g/100 g of the snack food product based on the weight of the finished product, or 1, 1.5, 2, 2.5, 3, 3.5 or 4, g/100 g of the snack food product based on the weight of the finished product.

In some embodiments where the snack food product is made from a dough comprising fresh vegetables and/or fruit, the snack food product has a glucosinolate content of 45-55, 46-54, 47-54 or 47.5-53.5 mg/100 g snack food product based on the weight of the finished product or 45, 46, 47, 48, 49, 50, 51, 52, 53, 54 or 55 mg/100 g snack food product based on the weight of the finished product. In some such embodiments, the glucosinolate content is derived or derived primarily from a fruit and/or vegetable content of 2.5. 3.0, 3.1, 3.2, 3.3, 3.4, 3.5, 3.6, 3.7, 3.8, 3.9 or 4 g/100 g of the snack food product based on the weight of the finished product. In some such embodiments, the snack food product has a glucosinolate content of 45 to 55 mg/100 g snack food product based on the weight of the finished product or 45, 45.5, 46, 46.5, 47, 47.5, 48, 48.5, 49, 49.5, 50, 50.5, 51, 51.5, 52, 52.5, 53, 53.5, 54, 54.5 or 55 mg/100 g snack food product based on the weight of the finished product, optionally between 46 and 53 mg/100 g snack food product based on the weight of the finished product and the glucosinolate content is derived or derived primarily from a fruit and/or vegetable content of 2.5, 3.0, 3.1, 3.2, 3.3, 3.4, 3.5, 3.6, 3.7, 3.8, 3.9 or 4 g/100 g of the snack food product based on the weight of the finished product, optionally 3.5 g/100g of the snack food product based on the weight of the finished product.

In some embodiments where the snack food product is made from a dough comprising IQF vegetables and/or fruit, the snack food product has a glucosinolate content of 10.5 - 15, 11.0-14.5, 11.5-14.0, 11.5-13.5 or 12-13 mg/100 g snack food product based on the weight of the finished product, or 11, 11.5, 12 or 12.5 mg/100 g snack food product based on the weight of the finished product. In some embodiments, the glucosinolate content is derived from a fruit and/or vegetable content of 1.5, 1.6, 1.7, 1.8, 1.9, 2.0, 2.1, 2.2, 2.3, 2.4 or 2.5 g/100 g of the snack food product based on the weight of the finished product. In some such embodiments, the glucosinolate content is derived or derived primarily from a fruit and/or vegetable content of 1.5-2.5 g/100 g of the snack food product based on the weight of the finished product, or 1.5, 1.6, 1.7, 1.8, 1.9, 2.0, 2.1, 2.2, 2.3, 2.4 or 2.5 mg/100 g of the snack food product based on the weight of the finished product. In some such embodiments, the snack food product has a glucosinolate content of 10.5 - 15, 11.0-14.5, 11.5-14.0, 11.5-13.5, 11.5 - 13 or 12-13 mg/100 g snack food product based on the weight of the finished product, or 11, 11.5, 12 or 12.5 mg/1oo g snack food product based on the weight of the finished product, optionally 11.5-13 mg/100 g snack food product based on the weight of the finished product and the glucosinolate content is derived or derived primarily from a fruit and/or vegetable content of 1.5, 1.6, 1.7, 1.8, 1.9, 2.0, 2.1, 2.2, 2.3, 2.4 or 2.5 g/100 g of the snack food product based on the weight of the finished product, optionally 1.9g/100 g of the snack food product based on the weight of the finished product.

In some embodiments, the glucosinolate content of the snack food product is derived or derived primarily from broccoli;
and/or
(iii) a flavonoid content of 85 to 170 mg/100g of snack food product based on the weight of the finished product, or 86 - 169, 87-168, 88-167, 89-166, 90-166 or 90 - 165 mg/ 100g of snack food product based on the weight of the finished product.

In some embodiments where the snack food product is made from a dough comprising fresh vegetables and/or fruit, the snack food product has a flavonoid content of 155-170, 156-169, 157-168 or 158-168 mg/100 g snack food product based on the weight of the finished product or 155, 159, 160, 161, 162, 163, 164, 165, 166, 167, 168, 169, or 170 mg/100 g snack food product based on the weight of the finished product. In some such embodiments, the flavonoid content is derived or derived primarily from a fruit and/or vegetable content of 9-15, 10-14, 11-13, or 11.5-12 g /100 g of the snack food product based on the weight of the finished product. In some such embodiments, the snack food product has a flavonoid content of 155-170 mg/100 g snack food product based on the weight of the finished product or 155, 159, 160, 161, 162, 163, 164, 165, 166, 167, 168, 169, or 170 mg/100 g snack food product based on the weight of the finished product, optionally 160-166 mg/100 g snack food product based on the weight of the finished product and the flavonoid content is derived or derived primarily from a fruit and/or vegetable content of 9-15, 10-14, 11-13, or 11.5-12 g g/100 g of the snack food product based on the weight of the finished product, optionally 11.7 g/100g of the snack food product based on the weight of the finished product.

In some embodiments where the snack food product is made from a dough comprising IQF vegetables and/or fruit, the snack food product has a flavonoid content of 80-100 mg/100 g snack food product based on the weight of the finished product, or 82-99, 73-98, 84-97, 85-96, 86-97, or 87-96 mg/100 g snack food product based on the weight of the finished product. In some such embodiments, the flavonoid content is derived or derived primarily from a fruit and/or vegetable content of 5-9, 6-8, or 7-8 g/100 g of the snack food product based on the weight of the finished product. In some such embodiments, the snack food product has a flavonoid content of 80-100 mg/100 g snack food product based on the weight of the finished product, or 82-99, 73-98, 84-97, 85-96, 86-97, or 87-96 mg/100 g snack food product based on the weight of the finished product, optionally 87-96 mg/100 g snack food product based on the weight of the finished product. In some such embodiments, the flavonoid content is derived or derived primarily from a fruit and/or vegetable content of 5-9, 6-8, or 7-8 g/100 g of the snack food product based on the weight of the finished product, optionally about 7.6 g/1oog of the snack food product based on the weight of the finished product.

In some embodiments, the flavonoid content of the snack food product is derived or derived primarily from onion and/or parsley.

In some embodiments where the snack food product is made from a dough comprising fresh vegetables and/or fruit, the snack food product has a carotenoid content of 21.5-22.5 mg/100 g snack food product based on the weight of the finished product; a glucosinolate content of 46-54 mg/100g snack food product based on the weight of the finished product; and a flavonoid content of 161-166 mg /100g snack food product based on the weight of the finished product. In some such embodiments, the snack food product comprises carrot, broccoli, onion and parsley. In some such embodiments, the snack food product comprises 10-12 g, optionally 11.3 g carrot per 100 g snack food product based on the weight of the finished product; 3-4 g, optionally 3.5 g broccoli per 100g snack food product based on the weight of the finished product; 8.5-9.5 g, optionally 9.3 g onion per 100 g snack food product based on the weight of the finished product; and 2-3 g, optionally 2.4 g parsley per 100g snack food product based on the weight of the finished product.

In some embodiments where the snack food product is made from a dough comprising IQF vegetables and/or fruit, the snack food product has a carotenoid content of 3 -3.3 mg/100 g snack food product based on the weight of the finished product; a glucosinolate content of 12-13 mg/100g snack food product based on the weight of the finished product; and a flavonoid content of 87-96 mg /100 g snack food product based on the weight of the finished product. In some such embodiments, the snack food product comprises carrot, broccoli, onion and parsley. In some such embodiments, the snack food product comprises 11.5-12.5 g, optionally 12 g carrot per 100 g snack food product based on the weight of the finished product; 1.5-2.5 g, optionally 2 g broccoli per 100g snack food product based on the weight of the finished product; 5.5-6.5 g, optionally 5.7 g onion per 100 g snack food product based on the weight of the finished product; and 1.5-2.5 g, optionally 1.9 g parsley per 100g snack food product based on the weight of the finished product.

### Advantages

The present disclosure is based on the surprising finding by the inventors that a snack food product could be produced from a dough comprising high levels of fresh or individually quick frozen fruit and/or vegetables using a combination of microwave, impingement and conventional baking, resulting in a snack food product having good levels of fruit and /or vegetables and good levels of at least one phytochemical.

The present invention will now be described in greater detail with reference to the following non-limiting Examples.

### Examples

### Example 1

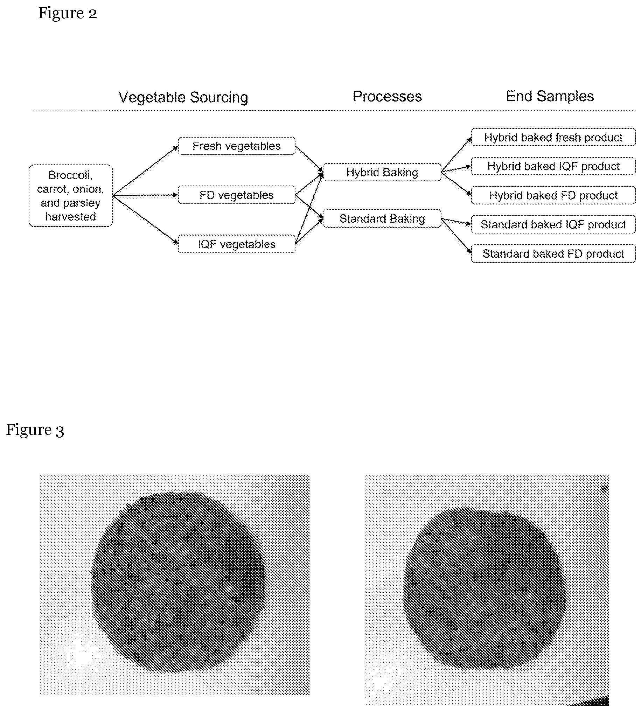

A comparison was undertaken of 5 products, comprising fresh, IQF or FD vegetables prepared by hybrid or standard baking, as depictured in Figures 1 and 2 and detailed in Table 2.

### 1.1 Vegetable preparation

Broccoli, onion, parsley, and carrots were obtained from the same harvest as a single-time-point supply. After harvesting, a portion of the vegetables were sent for phytochemical analysis.

The remaining vegetables were prepared as follows: carrots and onions were peeled, washed, diced (10 mm onion, 10 mm carrot), re-washed, and de-watered using a colander to drain remaining water. Broccoli heads were removed from their stalks and cut into <50 mm pieces.

Parsley and the chopped carrots, onion, and broccoli were frozen using a blast freezer (FT36 Armfield Blast and Fluid Bed Freezer, Hampshire, UK) followed by a portion being freeze-dried (Birchover freeze-dryer, Birchover Instruments Ltd, Hertfordshire, UK) over a 72-hour cycle. FD vegetables were not processed further but added directly to a z-blade mixer with other dough ingredients (further details below).

IQF and fresh broccoli, carrot, onion, and parsley were then steamed using 100% steam at 100°C (Rational SCCXS 6 2/3 E / 01, Landsberg am Lech, Germany) for 5 min, 5 min, 2 min, and 1 min respectively. The steamed vegetables were comminuted using a hand-blender (Russell Hobbs 22241, Manchester, UK) to form pieces <2 mm suitable for sheeting.

### 1.2 Dough Preparation

The prepared vegetables were added to a z-blade mixer (KitchenAid 5KSM7990XBSM, St. Joseph, Michigan, USA) with the other dough ingredients and, optionally water, as detailed in Table 1. In each case the ingredients were mixed for 1 minute using a z-blade mixer to form a uniform dough suitable for sheeting.

**Table 1: Dough formulations IQF (individually quick frozen), FD (freeze-dried), HOSO (high oleic sunflower oil).**

| Ingredient | Quantity of ingredients in recipe (g) | | | | |
|---|---|---|---|---|---|
| | Hybrid baked (fresh vegetables) | Hybrid baked (IQF vegetables) | Hybrid baked (FD vegetables) | Standard baked (IQF vegetables) | Standard baked (FD vegetables) |
| Broccoli | 81.6 | 52.6* | 10.4 | 20* | 22 |
| Carrot | 437.8 | 266 | 56.4 | 85.8 | 46.2 |
| Onion | 214.2 | 137.2 | 27.2 | 41.2 | 8.5 |
| Parsley | 39.0 | 23.6 | 5 | 7.2 | 4.2 |
| Potato flake | 137.8 | 124 | 53.6 | 125 | 44 |
| Corn starch (Merigel^{®}) | 46.9 | 18.6 | 33 | 33 | 27 |
| HOSO | 15 | 5 | 10 | 10 | 8.3 |
| Lecithin | 3 | 2 | 2 | 3.2 | 2 |
| Sugar | 3.8 | 7 | 2.4 | 2 | 1.6 |
| Water | 0 | 0 | 404 | 22 | 126 |
| Moisture content of dough | 71.54% | 71.66% | 68.19% | 46.28% | 41.75% |

The doughs were each formulated to give rise to a snack product comprising approximately 2:11:5:1 broccoli, carrot, onion and parsley based upon the vegetable ratio.

Each dough was then hand sheeted into chip mould: 5 mm diameter circle with 2 mm depth.

### 1.3 Baking

The moulds were then baked using ether hybrid baking or standard baking techniques. Hybrid baking used a continuous microwave oven to reduce the moisture content of the dough from about 70-80% to about 40% followed by continuous impingement drying to reduce the moisture content to about 8-15% and a final hot air drying to reduce the moisture content to about 4% as the finished product. Standard baking omits the microwave step, starting with a dough of about 40% moisture content, and drying using impingement drying to reduce the moisture content to about 8-15%, followed by hot air drying to reduce the moisture content to about 4% as the finished product. Details of the baking steps are provided in Table 2.

**Table 2: Processes and settings to produce the five products. IQF (Individually quick frozen), FD (freeze-dried), G1 (generator 1), G2 (generator 2), RT (residence time), BS (belt speed)**

| Product | Microwave settings | Impingement oven settings | | Hot-air batch oven settings | Packaging |
|---|---|---|---|---|---|
| | | Oven 1 | Oven 2 | | |
| Hybrid baked fresh product | G1: 4 kW | 170°C | 150°C | 115°C | Once cooled (20 min) product was packaged in a nitrogen flushed airtight bag, before |
| | G2: 3.75 kW | BS: 13.9 Hz | BS: 13.9 Hz | RT: 20 m | |
| | RT: 53 s | | | | |
| Hybrid baked IQF product | G1: 3.75 kW | 170°C | 140°C | 115°C | |
| | G2: 3.5 kW | BS: 11 Hz | BS: 11 Hz | RT: 20 m | |
| | RT: 53 s | | | | |
| Hybrid baked FD product | G1: 4 kW | 170°C | 150°C | 115°C | being kept at 4°C until phytochemical analysis |
| | G2: 3.75 kW | BS: 9 Hz | BS: 9 Hz | RT: 15 m | |
| | RT: 53 s | | | | |
| Standard baked IQF product | Not used | 195°C | 175°C | 115°C | |
| | | BS: 9 Hz | BS: 9 Hz | RT: 45 m | |
| Standard baked FD product | Not used | 195°C | 175°C | 115°C | |
| | | BS: 9 Hz | BS: 9 Hz | RT: 50 m | |

Drying details were as follows:

| | Hybrid Baked | | |
|---|---|---|---|
| | | Standard Baked | |
| | Microwave oven | Impinger oven | Convention oven |
| Moisture change (%) | 72 to 35 | 35 to 15 | 15 to 4 |
| Moisture Loss (DB) (g/g) | 2.033 | 0.362 | 0.135 |
| Drying Rate (g/g/s) | 0.034 | 0.0033 | 0.00026 |
| Drying Rate Ranges | | | |
| Upper g/g/s | 0.20 | 0.020 | 0.00050 |
| Lower g/g/s | 0.01 | 0.002 | 0.00006 |
| Moisture Ranges (%) | In: 45 to 90 | In: 35 to 45 | In: 15 to 8 |
| | Out: 35 to 45 | Out: 15 to 8 | Out: 5 to 1 |

### 2. Dough and Finished Product Content

Details of the content of the five finished products in comparison to the relative dough are provided in Tables (i) - (v).

### (i) Fresh fruit and/or vegetables, using hybrid baking (both sides of finished snack shown in Figure 3)

| | % Quantity in Dough | % Content in finished Product |
|---|---|---|
| Potato Flake | 14.04 | 48.45 |
| Merigel^{®} | 5.03 | 17.58 |
| Fresh Carrot | 44.60 | 11.28 |
| Fresh Onion | 21.82 | 9.30 |
| Sugar | 1.53 | 5.03 |
| Fresh Broccoli | 8.31 | 3.51 |
| Fresh Parsley | 3.98 | 2.38 |
| Lecithin | 0.38 | 1.38 |
| HOSO | 0.30 | 1.09 |
| Added Water | 0.00 | 0.00 |
| Total | 100.00 | 100.00 |
| Total vegetable content (carrot, onion, broccoli and parsley) | | 26.47 |

Moisture content of finished product: 4 wt % based on the weight of the finished product. Dough comprised 78.71 g fresh vegetables per 100g dough. Finished product made using 272.88 g fresh vegetables per 100g finished product.

### (ii) IQF fruit and/or vegetables, using hybrid baking

| | % Quantity in Dough | % Content in finished Product |
|---|---|---|
| Potato Flake | 18.92 | 62.04 |
| IQF Carrot | 43.62 | 11.97 |
| Merigel^{®} | 2.83 | 9.39 |
| IQF Onion | 20.91 | 5.74 |
| HOSO | 1.07 | 3.66 |
| Sugar | 0.86 | 2.69 |
| IQF Broccoli | 7.99 | 1.92 |
| IQF Parsley | 3.60 | 1.85 |
| Lecithin | 0.21 | 0.73 |
| Added Water | 0.00 | 0.00 |
| Total | 100.00 | 100.00 |
| Total vegetable content (carrot, onion, broccoli and parsley) | | 21.48 |

Moisture content of finished product: 4 wt % based on the weight of the finished product. Dough comprised 76.11 g IQF vegetables per 100g dough. Finished product made using 250.75 g IQF vegetables per 100g finished product.

### (iii) FD fruit and/or vegetables, using hybrid baking

| | % Quantity in Dough | % Content in finished Product |
|---|---|---|
| FD Carrot | 9.39 | 28.61 |
| Potato Flake | 8.93 | 26.82 |
| Merigel^{®} | 5.49 | 16.69 |
| FD Onion | 4.54 | 13.16 |
| FD Broccoli | 1.72 | 5.09 |
| Sugar | 1.67 | 4.78 |
| FD Parsley | 0.84 | 2.50 |
| Lecithin | 0.42 | 1.31 |
| HOSO | 0.33 | 1.04 |
| Added Water | 66.66 | 0.00 |
| Total | 100.00 | 100.00 |
| Total vegetable content (carrot, onion, broccoli and parsley) | | 49.36 |

Moisture content of finished product: 4 wt % based on the weight of the finished product. Dough comprised 16.51g FD vegetables per 100g dough. Finished product made using 49.81 g FD vegetables per 100g finished product (equivalent to 555.68g of fresh vegetables).

### (iv) IQF fruit and/or vegetables, using standard baking

| | % Quantity in Dough | % Content in finished Product |
|---|---|---|
| Potato Flake | 38.69 | 67.14 |
| Merigel^{®} | 10.21 | 17.94 |
| Sugar | 3.09 | 5.11 |
| IQF Carrot | 26.60 | 3.86 |
| IQF Onion | 12.75 | 1.85 |
| Lecithin | 0.97 | 1.77 |
| HOSO | 0.61 | 1.10 |
| IQF Broccoli | 4.87 | 0.62 |
| IQF Parsley | 2.19 | 0.60 |
| Added Water | 0.00 | 0.00 |
| Total | 100.00 | 100.00 |
| Total vegetable content (carrot, onion, broccoli and parsley) | | 6.93 |

Moisture content of finished product: 4 wt % based on the weight of the finished product. Dough comprised 46.42 g IQF vegetables per 100g dough. Finished product made using 80.93 g IQF vegetables per 100g finished product.

### (v) FD fruit and/or vegetables, using standard baking

| | % Quantity in Dough | % Content in finished Product |
|---|---|---|
| FD Carrot | 17.25 | 28.61 |
| Potato Flake | 16.39 | 26.83 |
| Merigel^{®} | 10.08 | 16.69 |
| FD Onion | 8.34 | 13.16 |
| FD Broccoli | 3.17 | 5.09 |
| Sugar | 3.07 | 4.78 |
| FD Parsley | 1.55 | 2.50 |
| Lecithin | 0.76 | 1.31 |
| HOSO | 0.61 | 1.04 |
| Added Water | 38.79 | 0.00 |
| Total | 100.00 | 100.00 |
| Total vegetable content (carrot, onion, broccoli and parsley) | | 49.36 |

Moisture content of finished product: 4 wt % based on the weight of the finished product. Dough comprised 30.3g FD vegetables per 100g dough. Finished product made using 49.81g FD vegetables per 100g finished product (equivalent to 555.66g of fresh vegetables).

### 3. Determination of phytochemicals in resultant snack products compared to fresh vegetables

### 3.1. Sample analysis for apigenin and quercetin

Samples of each one of the five products were homogenised by a blender and thoroughly mixed. 25 ml of 70 % methanol (60 °C) was added to each sample (1.0 g, analysed in triplicate) of the homogenised material. The sample was vortexed for 30 seconds and then heated at 60 °C for 60 minutes (additional vortexing was performed at 20, 40 and 60 minutes). The sample then stood and cooled for 30 minutes. A portion of the extract was filtered (0.45 µm) prior to analysis.

Liquid Chromatography - Mass Spectrometry (LC-MS) analysis was performed using a Waters Acquity Ultra-performance liquid chromatography (UPLC) system coupled to a photodiode array detector with an in-line TSQ-µ triple quadrupole mass spectrometer operated in electrospray mode. Chromatographic separation was achieved using a Waters HSS T3 100 x 2.1 mm, 1.7 µm column maintained at 35 °C. The flow rate was 400 µl/min, and injection volume was 1 µl. The binary gradient used 0.1 % formic acid containing water (solvent A) and 0.1 % formic acid containing acetonitrile (solvent B). The gradient started at 15 % solvent B at injection for 0.5 minutes, increasing to 50 % solvent B at 7 minutes, and 95 % solvent B at 8 minutes, and held for 1 minute before returning to initial conditions with a 2 minute equilibration time. The mass spectrometer was operated in positive electrospray and scanning mode. The ultraviolet (UV) detector was set to 336 nm for apigenin and 350 nm for quercetin analysis.

### 3.2. Sample analysis for β-carotene

Samples for β-carotene analysis (0.5g) were homogenised with 1:1 THF/MeOH (v/v; 20ml), sodium carbonate (0.1g) and 25µl of internal standard (echinenone; 1mg/ml in dichloromethane).The resulting suspension was filtered and washed three times with 1:1 THF/MeOH (20ml). The combined THF/MeOH filtrates were transferred to a separating funnel and washed three times with petroleum ether (40-50 fraction, containing 0.1% BHT; 20ml) and 10% NaCl solution (20ml), each time drawing off the lower THF/MeOH/ aqueous phase to waste. The combined petroleum ether fraction was washed with water (3 x 500ml) drawing off the lower aqueous wash each time to waste. The petroleum ether layer was collected into a 250ml round-bottomed flask and evaporated to near dryness at 40°C (pressure of 150 bar) in a rotary evaporator. Petroleum ether (10ml) was added to redissolve the residue, and was transferred to a smaller 25ml round-bottomed flask, and the sample evaporated to dryness. The residue was redissolved in dichloromethane (5ml) and transferred to a 20ml volumetric flask and made up to 20ml with the mobile phase (acetonitrile containing 0.1% formic acid). An aliquot (300µl) was transferred to a brown LC vial for UPLC analysis.

Samples were analysed using high-performance liquid chromatography-UV (HPLC-UV). An isocratic method, with a solvent of 65% acetonitrile and 35% methanol containing 0.016% tributylamine, was used to elute the beta-carotene with UV detection at a wavelength of 450nm. The column used was a Waters 250x 4.6 mm x 3,22um ODS2 C18 with an oven temperature of 35°C. The flow rate was 1.5ml/min and injection volume of 7.5µl. Under the conditions applied, the β-carotene eluted at approximately 3.3 minutes for fresh, IQF, and FD carrot, and 25.6 minutes for product samples. Quantification was undertaken using calibration curves of peak area vs concentration of freshly prepared standard solutions of the beta-carotene and each sample was measured in triplicate.

### 3.3. Sample analysis for glucosinolates

Prior to glucosinolate analysis, fresh and IQF broccoli were FD and powdered (domestic food mixer), and samples of the broccoli and the products were taken in triplicate. Glucosinolates were measured using a method that converts the glucosinolates to the equivalent desulfo-glucosinolates (Hollands et al. Mol Nutr Food Res. 2012, 56(12), 1906-16). Samples (1 g) of the homogenised snack product powder were extracted with hot aqueous methanol (70 % vol/vol, 10 ml) following the addition of internal standard (sinigrin). Samples were mixed by vortexing and incubated at 70 °C for 20 - 30 minutes with occasional mixing. Extracts were allowed to cool and a sample (3 ml) of the supernatant was applied to an ion exchange column that was subsequently washed with water (2 x 0.5 ml) and then 0.02 M sodium acetate (2 x 0.5 ml). The columns were then layered with purified sulfatase (75 µl) and incubated at RTP overnight for desulfo-glucosinolates conversion. The desulfo-glucosinolates were eluted by sequential application of 0.5, 0.5, and 0.25 ml water and analysed using HPLC as described below.

Desulfo-glucosinolates were analysed using a Waters Spherisorb ODS2 (250 x 4.6 mm i.d., 5 µm particle size) column connected to a model 1100 HPLC system (Agilent Technologies, Waldbronn, Germany) comprising of a binary pump, degasser, cooled autosampler, column oven and diode array detector. Snack product samples were eluted at 1.0 mLmin-1 with a gradient of increasing acetonitrile using 0.1 % formic acid containing water (solvent A) and 0.1% formic acid containing acetonitrile (solvent B). The gradient started at 0 % solution B increasing over 25 min to 50 % B and finally re-equilibrated to 0 % B for 7 min. Quantifications were done by using absorbance at 229 nm by comparison with the internal standard (sinigrin) peak area ratio and with correction factors for each of the glucosinolates.

### 3.4. Sample analysis for sulforaphane

Each snack product was blended to homogenise the material before triplicate sampling was conducted, with samples were then incubated in a phosphate buffer solution. This incubation step allowed any active broccoli myrosinase enzyme that is present to hydrolyse the glucosinolates in the sample and allow formation of the corresponding isothiocyanates such as sulforaphane from glucoraphanin (MSB).

Samples (3 x 40 mg) were weighed into 2 ml screw-top microtubes and 1 ml of 1 x PBS (GIBCO 10X stock diluted 1:10 with Milli Q water) was added to each tube. The tubes were then sealed, and vortex mixed. The samples were incubated on the heating block at 37 °C for 2 hours, with vortex mixing every 15 min to ensure optimal hydrolysis. After hydrolysis, the tubes were centrifuged (13,000 rpm [17,000 g], at 4 °C, for 30 min and supernatants were removed and filtered (0.2 µm aqueous solvent filter) and transferred 45 µl into separate HPLC vials and added 5 µl (100 µM) of D8-SF as an internal standard. After vortexing samples were analysed by LC-MS/MS.

### 4 Results

4.1. Impact of IQF and FD pre-processing on phytochemical content of fresh vegetables The content of apigenin glucosides in parsley (table 3a), quercetin glucosides in red onion (table 3b), β-carotene in carrot (table 3c), glucosinolates and sulforaphane in broccoli (table 3d) was analysed in the fresh, IQF, and FD samples to determine any impact of the initial pre-processing on the vegetables.

**Table 3a: Apigenin glucosides in fresh parsley and after IQF or freeze-drying pre-processing given in mg/100 g dry weight. A7AG (apigenin 7-apiosyl-glucoside), A76MAG (apigenin 7-O-(6'- malonyl apiosyl glucoside), A7G (apigenin 7-O-glucoside), A75MAG (apigenin 7-O-(5'-malonyl apiosyl glucoside), A (Apigenin)**

| Apigenin glucoside | Fresh (mg/100g dw) | IQF (mg/100g dw) | FD (mg/100g dw) |
|---|---|---|---|
| A7AG | 2003.7 ± 47.7 | 1608.8 ± 151.2 | 335.8 ± 16.4 |
| A76MAG | 463.2 ± 15.6 | 47.9 ± 2.1 | 35.2 ± 1.3 |
| A7G | 141.4 ± 3.6 | 56.3 ± 8.9 | 172.2 ± 5.1 |
| A75MAG | 89.6 ± 2.4 | 260.2 ± 48.6 | 1635.2 ± 49.9 |
| A | 0 | 0 | 0.8 ± 0.3 |
| Total | 2757.6 ± 60.6 | 1973.0 ± 200.2 | 2179.3 ± 66.3 |

**Table 3b: Quercetin glucosides in onion and after IQF or freeze-drying pre-processing given in mg/100 g dry weight. Q-di-Gluc (Quercetin 3,4'-diglucoside), Q-3-Gluc (Quercetin 3-O-glucoside), Q-4'-Gluc (Quercetin 4'-O-glucoside)**

| Quercetin glucoside | Fresh (mg/100g dw) | IQF (mg/100g dw) | FD (mg/100g dw) |
|---|---|---|---|
| Q-di-Gluc | 612.3 ± 18.1 | 529.4 ± 26.2 | 577.5 ± 6.4 |
| Q-3-Gluc | 12.1 ± 1.1 | 6.5 ± 0.4 | 6.8 ± 0.1 |
| Quercetin | 80.7 ± 2.3 | 8.2 ± 5 | 6.4 ± 0.3 |
| Q-4'-Gluc | 458.6 ± 15.0 | 324.7 ± 17.2 | 349.4 ± 4.4 |
| Total | 1163.7 ± 34.4 | 868.6 ± 46.5 | 950.1 ± 10.7 |

**Table 3c: β-carotene from fresh carrot and after IQF or freeze-drying pre-processing given in mg/100 g dry weight.**

| | Fresh (mg/100g dw) | IQF (mg/100g dw) | FD (mg/100g dw) |
|---|---|---|---|
| β-carotene | 477.4 ± 191.5 | 73.4 ± 17.3 | 730.1 ± 76.4 |

**Table 3d: Glucosinolates and sulforaphane in fresh broccoli and after IQF or freeze-drying pre-processing given in mg/100 g dry weight. IQF 1: frozen from the fresh batch. IQF 2: broccoli used in the snack products bought from Tesco. MSP (Glucoiberin), MSB (Glucoraphanin), OHIND (Hydroxyglucobrassicin), IND (Glucobrassicin), 1-MIND (1-methoxyglucobrassicine or Neoglucobrassicin), 4-MIND (4-methoxyglucobrassicin)**

| | Fresh (mg/100g dw) | IQF 1 (mg/100g dw) | IQF 2 (mg/100g dw) | FD (mg/100g dw) |
|---|---|---|---|---|
| *Glucosinolate* | | | | |
| MSP | 0 | 205.7 ± 3.3 | 52.8 ± 1.7 | 232.0 ± 8.0 |
| MSB | 521.3 ± 66.7 | 296.0 ± 3.0 | 403.0 ± 9.2 | 334.7 ± 6.3 |
| OHIND | 25.5 ± 2.8 | 4.0 ± 0.0 | 11.6 ± 1.4 | 23.7 ± 0.7 |
| IND | 121.5 ± 14.9 | 153.3 ± 7.7 | 127.2 ± 8.5 | 196.3 ± 9.3 |
| 1-MIND | 38.6 ± 3.9 | 16.7 ± 0.7 | 13.8 ± 1.8 | 31.3 ± 0.7 |
| 4-MIND | 50.0 ± 23.7 | 34.3 ± 1.3 | 53.1 ± 1.6 | 37.7 ± 1.7 |
| Total | 757.8 ± 99.5 | 710.0 ± 8.0 | 661.5 ± 7.3 | 856.3 ± 21.7 |

| *Isothiocyanate* | | | | |
|---|---|---|---|---|
| Sulforaphane | 50.62 ± 5.84 | 46.7 ± 0.7 | 0.34 ± 0.02 | 19.0 ± 1.0 |

The values from these tables enabled the calculation of the phytochemical content of the dough before undergoing hybrid or standard baking so an accurate assessment of the impact of the baking technique on phytochemical retention or degradation could be conducted.

### 5. Discussion

Though the IQF treatment appears to have degraded apigenin glucosides to a greater extent than freeze-drying, the FD parsley came from a portion of the IQF material that was subsequently FD. A leaching of apigenin during defrosting before analysis or a faster degradation of the compounds in the IQF form than FD form may explain the reduced level in the IQF sample. This result was also observed in carrot, where there were lower quantities of β-carotene in the IQF carrot than the FD despite the freeze-drying being conducted from a portion of the IQF sample.

The total apigenin glucosides only changed by <28%, however, the distribution of the glucosides changed dramatically, especially after the freeze-drying process. A7AG is reduced by 78% after IQF and 84% after freeze-drying, whereas A75MAG increases by 3-fold and 18-fold in IQF and FD parsley respectively. The conversion from apigenin apiosylglucosides to malonyl apiosylglucosides was also experienced by Hostetler et al (Agric Food Chem., 2012, 61, 202-208), when analysing flavone profiles in parsley during juicing. This is attributed to the enzymatic activity of malonic esterases, which upon cellular disruption of the parsley leaf can interact with flavone/flavonol 7-O-glucosides (Matern U. Arch Biochem Biophys., 1983, 224(1), 261-71).

Similarly to the apigenin glucosides, both processes significantly decreased quercetin glucosides, IQF by 25% and freeze-drying by 18%. Comparable losses of quercetin after freeze-drying has also been seen in kale (Korus A. LWT - Food Sci Technol., 2011, 44(8), 1711-1716), strawberries (Wojdylo et al. J Agric Food Chem., 2009, 57(4), 1337-1343) and sour cherries (Wojdylo et al. Food Bioprocess Technol., 2014, 7, 829-841). Despite these losses freeze-drying is widely recognised as an effective dehydration technology at retaining micronutrient and phytochemical nutrition due to the low heat and vacuum conditions (Bhatta et al. Foods., 2020, 9(1), 1-22) which preserve compounds greater than most other available technologies.

Fresh, IQF 1, and FD broccoli originated from the same harvest, however, IQF 2 is shop bought (Tesco, Leicester, UK, June 2021), therefore cannot be directly compared to the others. No glucoiberin (MSP) was detected in the fresh broccoli, however in both IQF and FD it was the second most abundant GLS to MSB. The IQF and freeze-drying process was most detrimental to MSB causing losses of 43% and 36% respectively. In contrast, both processes have a significantly positive affect on glucobrassicin (IND), increasing levels by (p<0.05) In this study, pre-processing of the broccoli did not include a blanch step which is usually conducted in commercial processing as a kill step for enzymes such as lipoxygenase, polyphenol oxidase, polygalacturonase, and chlorophyllase, which contribute to quality and nutritional deterioration. This process will also have caused the denaturation of myrosinase, the enzyme that catalyses MSB to sulforaphane. For this reason in IQF 2 broccoli there is limited sulforaphane compared to the other broccoli samples. Despite originating from a different source to the other samples, IQF 2 has a very similar distribution in GLS.

### Phytochemical content of the five snack products.

The phytochemical contents of the dried snacks were analysed (Table 4a) and the predicted percentage losses or gains of the phytochemical in the finished product were calculated as a percentage determined from the predicted quantity in the raw dough (Table 4b).

**Table 4a: The phytochemical content of the five snack products given in mg/100g dw. IQF (individually quick frozen), FD (freeze-dried), MAG (malonyl apiosyl glucoside)**

| Phytochemical (mg/100g dw) | Fresh Hybrid Baked | IQF Hybrid Baked | FD Hybrid Baked | FD Standard Baked | IQF Standard Baked |
|---|---|---|---|---|---|
| *Apigenin glucosides* | | | | | |
| Apigenin 7-apiosyl-glucoside | 12.35 ± 0.00 | 48.09 ± 2.37 | 46.53 ± 1.12 | 30.74 ± 2.17 | 14.14 ± 0.53 |
| Apigenin 7-O-(6'- MAG) | 61.55 ± 0.76 | 0.49 ± 0.03 | 0.45 ± 0.01 | 0.32 ± 0.03 | 0.11 ± 0.00 |
| Apigenin 7-O-glucoside | 16.87 ± 0.15 | 0.33 ± 0.02 | 0.21 ± 0.01 | 1.33 ± 0.10 | 0.03 ± 0.01 |
| Apigenin 7-O-(5'- MAG) | 7.56 ± 0.13 | 4.89 ± 0.37 | 6.16 ± 0.24 | 19.47 ± 1.73 | 0.33 ± 0.04 |
| Apigenin | 0.24 + 0.06 | 0.08 ± 0.01 | 0.07 ± 0.00 | 0.08 ± 0.01 | 0.03 ± 0.01 |
| Total apigenin glucosides | 98.52 ± 1.13 | 53.87 ± 2.64 | 53.42 ± 1.19 | 51.94 ± 3.75 | 14.64± 0.40 |

| *Quercetin glucosides* | | | | | |
|---|---|---|---|---|---|
| Quercetin 3,4'-diglucoside | 36.69 ± 0.37 | 11.00 ± 1.06 | 51.18 ± 1.13 | 19.53 ± 2.00 | 4.21 ± 0.10 |
| Quercetin 3-O-glucoside | 0.73 ± 0.00 | 0.29 ± 0.00 | 0.77 ± 0.00 | 0.48 ± 0.00 | 0.13 ± 0.13 |
| Quercetin | 0.31 ± 0.13 | 0.10 ± 0.00 | 0.65 ± 0.17 | 0.29 ± 0.00 | 0.61 ± 0.06 |
| Quercetin 4'-O-glucoside | 27.24 ± 0.30 | 26.28 ± 2.73 | 31.90 ± 0.94 | 12.38 ± 0.86 | 4.60 ± 0.10 |
| Total quercetin glucosides | 65.00 ± 0.70 | 37.66 ± 1.67 | 84.50 ± 0.71 | 32.67 ± 2.95 | 9.57 ± 0.20 |

| *Carotenoids* | | | | | |
|---|---|---|---|---|---|
| β-carotene | 21.93 ± 0.35 | 3.13 ± 0.08 | 1.92 ± 0.11 | 2.50 ± 0.09 | 0.58 ± 0.13 |

| *Glucosinolates* | | | | | |
|---|---|---|---|---|---|
| Glucoiberin | 7.76 ± 0.28 | 3.33 ± 0.67 | 2.12 ± 0.42 | 10.67 ± 0.67 | 0 |
| Glucoraphanin | 11.94 ± 0.30 | 5.00 ± 0.00 | 0.87 ± 0.00 | 7.67 ± 0.67 | 3.00 ± 0.00 |
| Hydroxyglucobrassicin | 0 | 0 | 0 | 0 | 0 |
| Glucobrassicin | 4.18 ± 0.30 | 3.00 ± 0.00 | 0.45 ± 0.00 | 6.00 ± 0.00 | 1.0 ± 0.00 |
| Neoglucobrassicin | 0.48 ± 0.00 | 0 | 0 | 1.00 ± 0.00 | 0 |
| 4-methoxyglucobrassicin | 25.49 ± 3.19 | 1.00 ± 0.00 | 0 | 1.00 ± 0.00 | 0 |
| Total glucosinolates | 49.85 ± 3.62 | 12.33 ± 0.67 | 3.44 ± 0.43 | 26.33 ± 1.33 | 4.00 ± 0.00 |

| *Isothiocyanates* | | | | | |
|---|---|---|---|---|---|
| Sulforaphane | 0.08 ± 0.08 | 0.10 ± 0.00 | 0.85 ± 0.03 | 0.60 ± 0.04 | 0.01 ± 0.00 |

**Table 4b: The percentage loss or gain of phytochemicals in the finished product compared to raw dough. IQF (individually quick frozen), FD (freeze-dried), MAG (malonyl apiosylglucoside)**

| Phytochemical (%) | Fresh HB | IQF HB | FD HB | FD Baked | IQF Baked |
|---|---|---|---|---|---|
| *Apigenin glucosides* | | | | | |
| Apigenin 7-apiosyl-glucoside | - 66.92 | + 74.58 | + 861.36 | + 372.07 | - 1.64 |
| Apigenin 7-O-(6'- MAG) | + 634.33 | - 40.25 | -11.36 | - 53.15 | - 74.65 |
| Apigenin 7-O-glucoside | + 559.35 | - 65.78 | - 91.54 | - 60.19 | - 94.29 |
| Apigenin 7-O-(5'- MAG) | + 367.41 | + 9.77 | - 73.87 | - 38.60 | - 85.73 |
| Apigenin | N/A | N/A | + 474.53 | + 388.05 | N/A |
| Total apigenin glucosides | + 97.45 | + 59.64 | + 70.05 | + 22.90 | - 17.01 |

| *Quercetin glucosides* | | | | | |
|---|---|---|---|---|---|
| Quercetin 3,4'-diglucoside | - 15.18 | - 63.88 | + 16.12 | - 11.47 | - 73.08 |
| Quercetin 3-O-glucoside | - 14.60 | - 22.43 | + 49.15 | + 85.76 | - 33.55 |
| Quercetin | - 94.65 | - 78.74 | + 33.02 | + 18.57 | + 150.90 |
| Quercetin 4'-O-glucoside | - 15.92 | + 40.68 | + 19.63 | - 7.24 | - 52.12 |
| Total quercetin glucosides | - 20.94 | - 24.62 | + 17.78 | - 9.02 | - 62.71 |

| *Carotenoids* | | | | | |
|---|---|---|---|---|---|
| β-carotene | - 32.94 | - 50.72 | - 98.42 | - 98.43 | - 83.43 |

| *Glucosinolates* | | | | | |
|---|---|---|---|---|---|
| Glucoiberin | + >100 | + 286.61 | - 69.31 | - 52.89 | - 100 |
| Glucoraphanin | - 14.13 | - 36.63 | - 91.21 | - 76.25 | - 35.72 |
| Hydroxyglucobrassicin | - 100 | - 100 | - 100 | - 100 | - 100 |
| Glucobrassicin | + 28.99 | + 20.47 | - 92.32 | - 69.63 | - 32.11 |
| Neoglucobrassicin | - 53.64 | - 100 | - 100 | - 68.29 | - 100 |
| 4-methoxyglucobrassicin | + 1776.68 | - 3.79 | - 100 | - 73.62 | - 100 |
| Total glucosinolates | + 146.54 | + 0.36 | - 86.49 | - 68.67 | - 47.79 |

| *Isothiocyanates* | | | | | |
|---|---|---|---|---|---|
| Sulforaphane | - 99.84 | + 1391.90 | + 50.61 | - 68.62 | + 152.22 |

Both the pre-processed state (fresh, frozen, or FD) of the vegetable in the dough and the baking method (baked or HB) impacted the phytochemical content of the finished snack. A factorial regression fitted using MiniTab, determined that the pre-processing state of the vegetables had a greater impact than baking method on all compounds. Baking using IQF vegetables was determined to be the most destructive processing technique, significantly (P > 0.05) decreasing all total compounds with exception of sulforaphane. This observation is supported by Perez et al. (Journal of functional foods vol. 48 (2018): 410-419. doi:10.1016jj.jff.2018.07.035), who found this technique to be more destructive than a FD baked dough or a IQF hybrid baked process. Dough made from fresh vegetables and cooked by HB, resulted in the highest retention of compounds, achieving the greatest increase total apigenin and glucosinolates and the least degradation of β-carotene.

Other than IQF baked, the total apigenin glucoside content appeared to increase during processing. It was the most stable phytochemical group followed by quercetin glucosides and glucosinolates, with β-carotene being the least stable compound. As found previously, compared to other flavonoids, apigenin glucosides are fairly resistant to degradation during food processing. During the production of the fresh HB snack, the total apigenin glucoside content increased by 97%, likely due mechanical processing releasing apigenin from the parsley cell matrix - as seen during the IQF and FD pre-processing. The cell structure deformation during the snack production will have facilitated the activity of malonic esterases thus increasing A76MAG and A75MAG. This interaction isn't observed in the other snacks as the reactions had already occurred during the pre-processing stages. Instead in the other snacks there was at least a 37% greater proportion of apigenin 7-apiosyl-glucoside, than apigenin or other glucosides. This was originally the most abundant glucoside in the parsley samples and therefore it is likely that through the processing more of this was released from the plant cellular matrix. The high proportion of apigenin 7-apiosyl-glucoside was also observed in the fresh processing of parsley juice at 121°C.

The arrangement and quantity of methyl, acyl, glucosyl and hydroxyl groups in the flavonoid structure is strongly linked to its stability. Though the presence of hydroxyl groups is important in antioxidant activity, they also contribute significantly to flavonoid instability, due to their reactivity. Generally the greater number of hydroxyl groups, the more unstable the flavonoid. Apigenin and quercetin contain three and five hydroxyl groups respectively, and therefore it is not surprising that apigenin would be the more stable flavonoid during the food processing. Generally glycosylation of hydroxyl groups in flavonoids enhance their stability, however, this is dependent on the location of the glycosyl group on the flavonol. During roasting of onion, quercetin glycosides that had the glycosyl group attached to the C-ring (3-O-position), in particular 3-O-galactoside and 3-O-rutinoside, were more susceptible to degradation than quercetin 4',O-glucoside, with the glycosyl group on the B-ring (4-O-position). After 15 minutes of roasting, quercetin 3,4'-diglucoside was found to degrade by 87%, similar to our results, where the diglucoside was significantly reduced in all but HB FD. During the heat treatment, quercetin mono- and diglucosides undergo deglycosylation forming the quercetin aglycone, with quercetin 4',O-glucoside sometimes formed as an intermediate during diglucoside deglycosylation. In this study the production of quercetin can be seen in both of the baked snacks and the hybrid baked FD snack. Interestingly the production of quercetin was not seen during the frying or boiling of onion. Across all snacks quercetin 3,4'-diglucoside and quercetin 4',O-glucoside make up at least 92% of the total quercetin content, a similar distribution to that found in the fresh and pre-processed onion, and to that seen in commercial onion varieties.

β-carotene was greatly degraded in both baked snacks and snacks created from FD carrot. Perez et al also experienced a substantial loss of β-carotene in snacks produced using FD carrots. They found that regardless of the proportion of carrot used in the dough, the snack would retain 10-13 mg per 100 g dry matter, which was up to 68% degradation. Visualisation of FD carrot rehydration through nuclear magnetic resonance and scanning electron spectroscopy, showed that cellular compartments had been damaged with permeable barriers. This porous network increases the exposure of β-carotene to the external environment and therefore susceptibility to degradation reactions. Due to its unsaturated structure, β-carotene is a highly reactive compound, specifically oxygen and temperature sensitive. This could explain the 98% loss of the compound in both FD snack products. The kinetics of its degradation is generally observed to adhere to a first-order reaction, with higher baking temperatures and longer baking times increasing degradation. During the convective hot-air drying of carrot slices, the half-life time of β-carotene decreased from 3.02 ± 0.04 h at 45°C to 1.43 ± 0.03 h at 65°C. The baked process required higher temperatures during the impingement drying and longer times in the batch oven than HB, therefore explaining losses of 98% and 83% in FD and IQF baked snacks respectively.

### 5. Conclusion

This example demonstrates that both baking technique and the state of the vegetable in the recipe formulation contribute to the extent of phytochemical retention in the finished product. Freeze-dying of vegetables is an effective way to dry vegetables to retain nutrition however, following processing of the powder has shown that β-carotene and glucosinolate compounds are susceptible to degradation. These results demonstrate that using fresh or IQF vegetables to create a snack product dough, which is then cooked using a combination of microwave, impingement and oven baking technology results in good phytochemical retention.

Various modifications to the embodiments of the disclosure described herein will be readily apparent to those skilled in the art and such modifications are included within the scope to the invention as defined in the appended claims.

## Claims

1. A non-fried fruit- and/or vegetable-containing snack food product comprising a rigid starch matrix comprising potato starch and one or more fruit and/or vegetables; and one or more phytochemicals comprising a carotenoid, a glucosinolate, a flavonoid or a mixture thereof; wherein the fruit and/or vegetable content of the product is:
between 18-27 wt% based on the weight of the product; and
derived from non-dehydrated, non-powdered fruit and/or vegetables.

2. A snack food product as claimed in claim 1, wherein at least some of the fruit and/or vegetable content of the product: (i) is visible in the form of pieces or particles; and/or (ii) has an intact cellular structure.

3. A snack food product as claimed in claim 1 or claim 2, wherein the fruit and/or vegetable content of the product is derived from fresh or individually quick frozen (IQF) fruit and/or vegetables.

4. A snack food product as claimed in any one of claims 1 to 3, wherein the product has a carotenoid content of 2 to 25 mg/1oog of snack food product; a glucosinolate content of 10 to 58 mg/100g of snack food product; and/or a flavonoid content of 85 to 170 mg/100g of snack food product.

5. A snack food product as claimed in any one of claims 1 to 4, wherein the fruit and/or vegetable content of the product is derived from fresh fruit and/or vegetables; and
(a) wherein the product has a carotenoid content of 16.5-25 mg/100 g snack food product; a glucosinolate content of 45-55 mg/100g snack food product; and/or a flavonoid content of 155-170 mg /100g snack food product; or
(b) wherein the product has a carotenoid content of 19-22.5 mg/100 g snack food product; a glucosinolate content of 46-54 mg/100g snack food product; and/or a flavonoid content of 158 - 168mg /100g snack food product; or
(c) wherein the product has a carotenoid content of 21.5-22.5 mg/100 g snack food product; a glucosinolate content of 46-54 mg/100g snack food product; and a flavonoid content of 161-166 mg /100g snack food product.

6. A snack food product as claimed in any one of claims 1 to 5, wherein the fruit and/or vegetable content of the product is:
derived from fresh fruit and/or vegetables; and
at least 25.5wt% based on the weight of the product.

7. A snack food product as claimed in claim 5 or claim 6, wherein the fruit and/or vegetables comprise carrot, broccoli, onion and parsley, and wherein the snack food product comprises:
10-12 g carrot per 100 g snack food product;
3-4 g broccoli per 100g snack food product;
8.5-9.5 g onion per 100 g snack food product; and
2-3 g parsley per 100g snack food product.

8. A snack food product as claimed in any one of claims 1 to 4, wherein the fruit and/or vegetable content of the product is:
derived from individually quick frozen (IQF) fruit and/or vegetables; and
18-23 wt% based on the weight of the product.

9. A snack food product as claimed in claim 8, wherein the product has:
(a) a carotenoid content of 3 -3.3 mg/100 g snack food product; a glucosinolate content of 12-13 mg/100g snack food product; and/or a flavonoid content of 87-96 mg /100 g snack food product; or
(b) a carotenoid content of 3 -3.3 mg/100 g snack food product; a glucosinolate content of 12-13 mg/100g snack food product; and a flavonoid content of 87-96 mg /100 g snack food product.

10. A snack food product as claimed in claim 8 or claim 9, wherein the fruit and/or vegetables comprise carrot, broccoli, onion and parsley, and wherein the snack food product comprises:
11.5-12.5 g carrot per 100 g snack food product;
1.5-2.5 g broccoli per 100g snack food product;
5.5-6.5 g onion per 100 g snack food product; and
1.5-2.5 g, parsley per 100g snack food product.

11. A snack food product as claimed in any one of claims 1 to 10, wherein the moisture content of the product is from 2 to 5 wt% based on the weight of the product.

12. A dough for producing a snack food product as claimed in any one of claims 1 to 11, wherein the dough comprises:
a. 70-80 wt% fresh or IQF fruit and/or vegetables;
b. 10-25 wt% dehydrated potato;
c. 2-7 wt% starch;
d. 0.1-1.0 wt% emulsifier;
e. 0.2-2 wt% edible oil.

13. A dough according to claim 12, wherein the dough comprises:
a. 70-80 wt% fresh or IQF fruit and/or vegetables;
b. 10-20 wt% dehydrated potato;
c. 2-6 wt% starch;
d. 0.2-0.4 wt% emulsifier;
e. 0.2-1.1 wt% edible oil.

14. A dough as claimed in claim 12 or 13, having a moisture content of 70 to 80 wt% based on the wet weight of the dough.

15. A method for making a non-fried fruit and/or vegetable containing snack food product as claimed in any one of claims 1 to 10, comprising:
a. selecting one or more fruit and/or vegetables in fresh or quick frozen (IQF) form;
b. optionally processing the fruit or vegetables;
c. combining the fruit and/or vegetables with dehydrated potato; starch; emulsifier; and edible oil in the following amounts to create a dough having a moisture content of from 70 to 80 wt% based on the wet weight of the dough:
| | |
|---|---|
| (i) vegetable(s)/fruit(s) | 70 to 80 wt%; |
| (ii) dehydrated potato: | 10 to 25wt%; |
| (iii) starch: | 2 to 7 wt% |
| (iv) emulsifier: | 0.1 to 1.0 wt%; |
| (v) edible oil: | 0.2 to 2 wt%; |
d. forming the dough mixture into a plurality of individual sheets having a thickness of from 1 to 8 mm;
e. microwave baking each sheet to produce a first intermediate baked sheet having a moisture content of from 35 to 45 wt% based on the weight of the intermediate baked sheet;
f. impinger oven baking the first intermediate baked sheet to produce a second intermediate baked sheet that has a moisture content of from 8 to 15 wt% based on the weight of the intermediate cooked sheet; and
g. baking the second intermediate baked sheet in a hot air convection oven to produce a baked snack food sheet that has a moisture content of from 0.5 to 5 wt% based on the weight of the baked snack food sheet.

16. A method as claimed in claim 15, wherein the fruit and/or vegetables are processed according to step (b), by:
(i) steam cooking at a temperature of at least 90 °C for a period of from 0.25 to 15 minutes and/or comminution; or
(ii) steam cooking at a temperature of at least 90 °C for a period of from 0.5 to 10 minutes; and/or comminution.

17. A method as claimed in claim 15 or claim 16, wherein the fruit and/or vegetables are one or more of carrot, onion broccoli or parsley.

## Patentansprüche

1. Nicht frittiertes, obst- und/oder gemüsehaltiges Snack-Lebensmittelprodukt, umfassend eine starre Stärkematrix, die Kartoffelstärke umfasst, und ein oder mehrere Obst- und/oder Gemüsesorten; und einen oder mehrere sekundäre Pflanzenstoffe, umfassend ein Carotinoid, ein Glucosinolat, ein Flavonoid oder ein Gemisch davon; wobei der Obst- und/oder Gemüsegehalt des Produkts:
zwischen 18 und 27 Gew.-% bezogen auf das Gewicht des Produkts beträgt; und
von nicht dehydriertem, nicht pulverisiertem Obst und/oder Gemüse abgeleitet ist.

2. Snack-Lebensmittelprodukt nach Anspruch 1, wobei mindestens ein Teil des Obst- und/oder Gemüsegehalts des Produkts: (i) in Form von Stücken oder Partikeln sichtbar ist; und/oder (ii) eine intakte Zellstruktur aufweist.

3. Snack-Lebensmittelprodukt nach Anspruch 1 oder Anspruch 2, wobei der Obst- und/oder Gemüsegehalt des Produkts von frischem oder einzeln schnellgefrorenem (IQF) Obst und/oder Gemüse abgeleitet ist.

4. Snack-Lebensmittelprodukt nach einem der Ansprüche 1 bis 3, wobei das Produkt einen Carotinoidgehalt von 2 bis 25 mg/100 g Snack-Lebensmittelprodukt; einen Glucosinolatgehalt von 10 bis 58 mg/100 g Snack-Lebensmittelprodukt; und/oder einen Flavonoidgehalt von 85 bis 170 mg/100 g Snack-Lebensmittelprodukt aufweist.

5. Snack-Lebensmittelprodukt nach einem der Ansprüche 1 bis 4, wobei der Obst- und/oder Gemüsegehalt des Produkts von frischem Obst und/oder Gemüse abgeleitet ist; und
(a) wobei das Produkt einen Carotinoidgehalt von 16,5 bis 25 mg/100 g Snack-Lebensmittelprodukt; einen Glucosinolatgehalt von 45 bis 55 mg/100 g Snack-Lebensmittelprodukt; und/oder einen Flavonoidgehalt von 155 bis 170 mg/100 g Snack-Lebensmittelprodukt aufweist; oder
(b) wobei das Produkt einen Carotinoidgehalt von 19 bis 22,5 mg/100 g Snack-Lebensmittelprodukt; einen Glucosinolatgehalt von 46 bis 54 mg/100 g Snack-Lebensmittelprodukt; und/oder einen Flavonoidgehalt von 158 - 168 mg/100 g Snack-Lebensmittelprodukt aufweist; oder
(c) wobei das Produkt einen Carotinoidgehalt von 21,5 bis 22,5 mg/100 g Snack-Lebensmittelprodukt; einen Glucosinolatgehalt von 46 bis 54 mg/100 g Snack-Lebensmittelprodukt; und einen Flavonoidgehalt von 161 bis 166 mg/100 g Snack-Lebensmittelprodukt aufweist.

6. Snack-Lebensmittelprodukt nach einem der Ansprüche 1 bis 5, wobei der Obst- und/oder Gemüsegehalt des Produkts:
von frischem Obst und/oder Gemüse abgeleitet ist; und
mindestens 25,5 Gew.-% bezogen auf das Gewicht des Produkts beträgt.

7. Snack-Lebensmittelprodukt nach Anspruch 5 oder Anspruch 6, wobei das Obst und/oder Gemüse Karotte, Brokkoli, Zwiebel und Petersilie umfasst und wobei das Snack-Lebensmittelprodukt umfasst:
10 bis 12 g Karotte pro 100 g Snack-Lebensmittelprodukt;
3 bis 4 g Brokkoli pro 100 g Snack-Lebensmittelprodukt;
8,5 bis 9,5 g Zwiebel pro 100 g Snack-Lebensmittelprodukt; und
2 bis 3 g Petersilie pro 100 g Snack-Lebensmittelprodukt.

8. Snack-Lebensmittelprodukt nach einem der Ansprüche 1 bis 4, wobei der Obst- und/oder Gemüsegehalt des Produkts:
von einzeln schnellgefrorenem (IQF) Obst und/oder Gemüse abgeleitet ist; und
18 bis 23 Gew.-% bezogen auf das Gewicht des Produkts beträgt.

9. Snack-Lebensmittelprodukt nach Anspruch 8, wobei das Produkt aufweist:
(a) einen Carotinoidgehalt von 3 bis 3,3 mg/100 g Snack-Lebensmittelprodukt; einen Glucosinolatgehalt von 12 bis 13 mg/100 g Snack-Lebensmittelprodukt; und/oder einen Flavonoidgehalt von 87 bis 96 mg/100 g Snack-Lebensmittelprodukt; oder
(b) einen Carotinoidgehalt von 3 bis 3,3 mg/100 g Snack-Lebensmittelprodukt; einen Glucosinolatgehalt von 12 bis 13 mg/100 g Snack-Lebensmittelprodukt; und einen Flavonoidgehalt von 87 bis 96 mg/100 g Snack-Lebensmittelprodukt.

10. Snack-Lebensmittelprodukt nach Anspruch 8 oder Anspruch 9, wobei das Obst und/oder Gemüse Karotte, Brokkoli, Zwiebel und Petersilie umfasst und wobei das Snack-Lebensmittelprodukt umfasst:
11,5 bis 12,5 g Karotte pro 100 g Snack-Lebensmittelprodukt;
1,5 bis 2,5 g Brokkoli pro 100 g Snack-Lebensmittelprodukt;
5,5 bis 6,5 g Zwiebel pro 100 g Snack-Lebensmittelprodukt; und
1,5 bis 2,5 g Petersilie pro 100 g Snack-Lebensmittelprodukt.

11. Snack-Lebensmittelprodukt nach einem der Ansprüche 1 bis 10, wobei der Feuchtigkeitsgehalt des Produkts 2 bis 5 Gew.-% bezogen auf das Gewicht des Produkts beträgt.

12. Teig zur Herstellung eines Snack-Lebensmittelprodukts nach einem der Ansprüche 1 bis 11, wobei der Teig umfasst:
a. 70 bis 80 Gew.-% frisches oder IQF-Obst und/oder -Gemüse;
b. 10 bis 25 Gew.-% dehydrierte Kartoffel;
c. 2 bis 7 Gew.-% Stärke;
d. 0,1 bis 1,0 Gew.-% Emulgator;
e. 0,2 bis 2 Gew.-% Speiseöl.

13. Teig nach Anspruch 12, wobei der Teig umfasst:
a. 70 bis 80 Gew.-% frisches oder IQF-Obst und/oder -Gemüse;
b. 10 bis 20 Gew.-% dehydrierte Kartoffel;
c. 2 bis 6 Gew.-% Stärke;
d. 0,2 bis 0,4 Gew.-% Emulgator;
e. 0,2 bis 1,1 Gew.-% Speiseöl.

14. Teig nach Anspruch 12 oder 13 mit einem Feuchtigkeitsgehalt von 70 bis 80 Gew.-% bezogen auf das Nassgewicht des Teigs.

15. Verfahren zur Herstellung eines nicht frittierten, obst- und/oder gemüsehaltigen Snack-Lebensmittelprodukts nach einem der Ansprüche 1 bis 10, umfassend:
a. Auswählen eines oder mehrerer Obst- und/oder Gemüsesorten in frischer oder schnellgefrorener (IQF) Form;
b. gegebenenfalls Verarbeiten des Obstes oder Gemüses;
c. Kombinieren des Obstes und/oder Gemüses mit dehydrierter Kartoffel; Stärke; Emulgator; und Speiseöl in den folgenden Mengen zur Herstellung eines Teigs mit einem Feuchtigkeitsgehalt von 70 bis 80 Gew.-% bezogen auf das Nassgewicht des Teigs:
| | |
|---|---|
| (i) Gemüse/Obst | 70 bis 80 Gew.-%; |
| (ii) dehydrierte Kartoffel: | 10 bis 25 Gew.-%; |
| (iii) Stärke: | 2 bis 7 Gew.-% |
| (iv) Emulgator: | 0,1 bis 1,0 Gew.-%; |
| (v) Speiseöl: | 0,2 bis 2 Gew.-%; |
d. Formen der Teigmischung zu einer Vielzahl einzelner Blätter mit einer Dicke von 1 bis 8 mm;
e. Mikrowellenbacken jedes Blattes zur Erzeugung eines ersten intermediär gebackenen Blattes mit einem Feuchtigkeitsgehalt von 35 bis 45 Gew.-% bezogen auf das Gewicht des intermediär gebackenen Blattes;
f. Impingement-Ofenbacken des ersten intermediär gebackenen Blattes zur Erzeugung eines zweiten intermediär gebackenen Blattes mit einem Feuchtigkeitsgehalt von 8 bis 15 Gew.-% bezogen auf das Gewicht des intermediär gebackenen Blattes; und
g. Backen des zweiten intermediär gebackenen Blattes in einem Heißluft-Konvektionsofen zur Erzeugung eines gebackenen Snack-Lebensmittelblattes mit einem Feuchtigkeitsgehalt von 0,5 bis 5 Gew.-% bezogen auf das Gewicht des gebackenen Snack-Lebensmittelblattes.

16. Verfahren nach Anspruch 15, wobei das Obst und/oder Gemüse gemäß Schritt (b) verarbeitet wird durch:
(i) Dampfgaren bei einer Temperatur von mindestens 90 °C während einer Dauer von 0,25 bis 15 Minuten und/oder Zerkleinern; oder
(ii) Dampfgaren bei einer Temperatur von mindestens 90 °C während einer Dauer von 0,5 bis 10 Minuten; und/oder Zerkleinern.

17. Verfahren nach Anspruch 15 oder Anspruch 16, wobei das Obst und/oder Gemüse eines oder mehrere von Karotte, Zwiebel, Brokkoli oder Petersilie ist.

## Revendications

1. Produit alimentaire de type snack non frit contenant des fruits et/ou des légumes, comprenant une matrice d'amidon rigide comprenant de l'amidon de pomme de terre et un ou plusieurs fruits et/ou légumes ; et un ou plusieurs composés phytochimiques comprenant un caroténoïde, un glucosinolate, un flavonoïde ou un mélange de ceux-ci ; dans lequel la teneur en fruits et/ou légumes du produit est :
comprise entre 18 et 27 % en poids sur la base du poids du produit ; et
dérivée de fruits et/ou légumes non déshydratés et non réduits en poudre.

2. Produit alimentaire de type snack selon la revendication 1, dans lequel au moins une partie de la teneur en fruits et/ou légumes du produit : (i) est visible sous la forme de morceaux ou de particules ; et/ou (ii) présente une structure cellulaire intacte.

3. Produit alimentaire de type snack selon la revendication 1 ou la revendication 2, dans lequel la teneur en fruits et/ou légumes du produit est dérivée de fruits et/ou légumes frais ou surgelés individuellement de manière rapide (IQF).

4. Produit alimentaire de type snack selon l'une quelconque des revendications 1 à 3, dans lequel le produit présente une teneur en caroténoïdes de 2 à 25 mg/100 g de produit alimentaire de type snack ; une teneur en glucosinolates de 10 à 58 mg/100 g de produit alimentaire de type snack ; et/ou une teneur en flavonoïdes de 85 à 170 mg/100 g de produit alimentaire de type snack.

5. Produit alimentaire de type snack selon l'une quelconque des revendications 1 à 4, dans lequel la teneur en fruits et/ou légumes du produit est dérivée de fruits et/ou légumes frais ; et
(a) dans lequel le produit présente une teneur en caroténoïdes de 16,5 à 25 mg/100 g de produit alimentaire de type snack ; une teneur en glucosinolates de 45 à 55 mg/100 g de produit alimentaire de type snack ; et/ou une teneur en flavonoïdes de 155 à 170 mg/100 g de produit alimentaire de type snack ; ou
(b) dans lequel le produit présente une teneur en caroténoïdes de 19 à 22,5 mg/100 g de produit alimentaire de type snack ; une teneur en glucosinolates de 46 à 54 mg/100 g de produit alimentaire de type snack ; et/ou une teneur en flavonoïdes de 158 - 168 mg/100 g de produit alimentaire de type snack ; ou
(c) dans lequel le produit présente une teneur en caroténoïdes de 21,5 à 22,5 mg/100 g de produit alimentaire de type snack ; une teneur en glucosinolates de 46 à 54 mg/100 g de produit alimentaire de type snack ; et une teneur en flavonoïdes de 161 à 166 mg/100 g de produit alimentaire de type snack.

6. Produit alimentaire de type snack selon l'une quelconque des revendications 1 à 5, dans lequel la teneur en fruits et/ou légumes du produit est :
dérivée de fruits et/ou légumes frais ; et
d'au moins 25,5 % en poids sur la base du poids du produit.

7. Produit alimentaire de type snack selon la revendication 5 ou la revendication 6, dans lequel les fruits et/ou légumes comprennent de la carotte, du brocoli, de l'oignon et du persil, et dans lequel le produit alimentaire de type snack comprend :
10 à 12 g de carotte pour 100 g de produit alimentaire de type snack ;
3 à 4 g de brocoli pour 100 g de produit alimentaire de type snack ;
8,5 à 9,5 g d'oignon pour 100 g de produit alimentaire de type snack ; et
2 à 3 g de persil pour 100 g de produit alimentaire de type snack.

8. Produit alimentaire de type snack selon l'une quelconque des revendications 1 à 4, dans lequel la teneur en fruits et/ou légumes du produit est :
dérivée de fruits et/ou légumes surgelés individuellement de manière rapide (IQF) ; et
de 18 à 23 % en poids sur la base du poids du produit.

9. Produit alimentaire de type snack selon la revendication 8, dans lequel le produit présente :
(a) une teneur en caroténoïdes de 3 à 3,3 mg/100 g de produit alimentaire de type snack ; une teneur en glucosinolates de 12 à 13 mg/100 g de produit alimentaire de type snack ; et/ou une teneur en flavonoïdes de 87 à 96 mg/100 g de produit alimentaire de type snack ; ou
(b) une teneur en caroténoïdes de 3 à 3,3 mg/100 g de produit alimentaire de type snack ; une teneur en glucosinolates de 12 à 13 mg/100 g de produit alimentaire de type snack ; et une teneur en flavonoïdes de 87 à 96 mg/100 g de produit alimentaire de type snack.

10. Produit alimentaire de type snack selon la revendication 8 ou la revendication 9, dans lequel les fruits et/ou légumes comprennent de la carotte, du brocoli, de l'oignon et du persil, et dans lequel le produit alimentaire de type snack comprend :
11,5 à 12,5 g de carotte pour 100 g de produit alimentaire de type snack ;
1,5 à 2,5 g de brocoli pour 100 g de produit alimentaire de type snack ;
5,5 à 6,5 g d'oignon pour 100 g de produit alimentaire de type snack ; et
1,5 à 2,5 g de persil pour 100 g de produit alimentaire de type snack.

11. Produit alimentaire de type snack selon l'une quelconque des revendications 1 à 10, dans lequel la teneur en humidité du produit est de 2 à 5 % en poids sur la base du poids du produit.

12. Pâte pour la production d'un produit alimentaire de type snack selon l'une quelconque des revendications 1 à 11, dans laquelle la pâte comprend :
a. 70 à 80 % en poids de fruits et/ou légumes frais ou IQF ;
b. 10 à 25 % en poids de pomme de terre déshydratée ;
c. 2 à 7 % en poids d'amidon ;
d. 0,1 à 1,0 % en poids d'émulsifiant ;
e. 0,2 à 2 % en poids d'huile comestible.

13. Pâte selon la revendication 12, dans laquelle la pâte comprend :
a. 70 à 80 % en poids de fruits et/ou légumes frais ou IQF ;
b. 10 à 20 % en poids de pomme de terre déshydratée ;
c. 2 à 6 % en poids d'amidon ;
d. 0,2 à 0,4 % en poids d'émulsifiant ;
e. 0,2 à 1,1 % en poids d'huile comestible.

14. Pâte selon la revendication 12 ou 13, présentant une teneur en humidité de 70 à 80 % en poids sur la base du poids humide de la pâte.

15. Procédé de fabrication d'un produit alimentaire de type snack non frit contenant des fruits et/ou des légumes selon l'une quelconque des revendications 1 à 10, comprenant :
a. la sélection d'un ou de plusieurs fruits et/ou légumes sous forme fraîche ou surgelée de manière rapide (IQF) ;
b. éventuellement, le traitement des fruits ou légumes ;
c. la combinaison des fruits et/ou légumes avec de la pomme de terre déshydratée ; de l'amidon ; un émulsifiant ; et de l'huile comestible dans les quantités suivantes pour créer une pâte présentant une teneur en humidité de 70 à 80 % en poids sur la base du poids humide de la pâte :
| | |
|---|---|
| (i) légume(s)/fruit(s) | 70 à 80 % en poids ; |
| (ii) pomme de terre déshydratée : | 10 à 25 % en poids ; |
| (iii) amidon : | 2 à 7 % en poids |
| (iv) émulsifiant : | 0,1 à 1,0 % en poids ; |
| (v) huile comestible : | 0,2 à 2 % en poids ; |
d. la mise en forme du mélange de pâte en une pluralité de feuilles individuelles présentant une épaisseur de 1 à 8 mm ;
e. la cuisson au micro-ondes de chaque feuille pour produire une première feuille cuite intermédiaire présentant une teneur en humidité de 35 à 45 % en poids sur la base du poids de la feuille cuite intermédiaire ;
f. la cuisson au four à impaction de la première feuille cuite intermédiaire pour produire une deuxième feuille cuite intermédiaire présentant une teneur en humidité de 8 à 15 % en poids sur la base du poids de la feuille cuite intermédiaire ; et
g. la cuisson de la deuxième feuille cuite intermédiaire dans un four à convection d'air chaud pour produire une feuille de snack alimentaire cuite présentant une teneur en humidité de 0,5 à 5 % en poids sur la base du poids de la feuille de snack alimentaire cuite.

16. Procédé selon la revendication 15, dans lequel les fruits et/ou les légumes sont traités selon l'étape (b) par :
(i) cuisson à la vapeur à une température d'au moins 90 °C pendant une durée de 0,25 à 15 minutes et/ou broyage ; ou
(ii) cuisson à la vapeur à une température d'au moins 90 °C pendant une durée de 0,5 à 10 minutes ; et/ou broyage.

17. Procédé selon la revendication 15 ou la revendication 16, dans lequel les fruits et/ou les légumes sont un ou plusieurs parmi la carotte, l'oignon, le brocoli ou le persil.
